# EUROPÄISCHE PATENTSCHRIFT

(11) **EP 4 311 733 B1**
(45) Veröffentlichungstag und Bekanntmachung des Hinweises auf die Patenterteilung: **25.06.2025**
(21) Anmeldenummer: 23186486.9
(22) Anmeldetag: 19.07.2023
(51) Int. Cl.: B60S 1/48, B60S 1/52

(54) **NACHRÜSTBARES WASCH-/WISCHSYSTEM FÜR KRAFTFAHRZEUGE**
RETROFIT WASHER/WIPER SYSTEM FOR MOTOR VEHICLES
SYSTÈME DE LAVAGE/ESSUYAGE ADAPTABLE POUR VÉHICULES AUTOMOBILES

(30) Priorität: 25.07.2022 DE 102022118536
(43) Veröffentlichungstag der Anmeldung: 31.01.2024
(73) Patentinhaber: VolaPlast GmbH@Co. KG, 34286 Spangenberg (DE)
(72) Erfinder: Bickel, Markus, 34326 Morschen (DE); Kraus, Peter, 34233 Fuldatal (DE); Schelhas, Martin, 34130 Kassel (DE); Waldmann, Thomas, 34119 Kassel (DE)
(74) Vertreter: Nestler, Jan Hendrik

(56) Entgegenhaltungen:
- EP-A2- 2 025 978
- EP-B1- 2 411 252
- DE-A1- 102010 054 687
- DE-A1- 102013 209 196
- DE-A1- 102020 116 023
- US-B1- 6 402 052

## Beschreibung

Die Erfindung betrifft ein umrüstbares Wischsystem, insbesondere ein umrüstbares Wischsystem für ein Fahrzeug, speziell für ein Kraftfahrzeug. Die Erfindung betrifft weiterhin ein Verfahren zum Umrüsten eines Wischsystems, insbesondere zum Umrüsten eines Wischsystems für ein Fahrzeug, speziell zum Umrüsten eines Wischsystems für ein Kraftfahrzeug.

Wischvorrichtungen zur Reinigung der Oberflächen von transparenten Fahrzeugkomponenten (beispielsweise Windschutzscheiben, Heckscheiben, Abdeckscheiben von Beleuchtungseinrichtungen) oder reflektierenden Fahrzeugkomponenten (beispielsweise Außenspiegel, Rückstrahler) sind bekannt und weit verbreitet. In der Regel sind solche Wischvorrichtungen bei Kraftfahrzeugen derart aufgebaut, dass sie einen Haltearm und ein Wischerblatt aufweisen, wobei Haltearm und Wischerblatt mithilfe eines Befestigungsmittels (Wischerblattadapter) miteinander verbunden sind, wobei typischerweise eine gewisse Beweglichkeit zwischen Wischerblatt und Haltearm verbleibt (insbesondere Drehbarkeit des Wischerblatts relativ zum Haltearm). Ein Wischvorgang wird dabei durch eine typischerweise schwenkende Hin- und Her-Bewegung des Haltearms bewirkt, wodurch das Wischerblatt entsprechend mitbewegt wird.

Wenn zusätzlich zum Entfernen von (Regen-)Wasser oder Schnee von der Oberfläche eine Reinigung der Oberfläche beispielsweise von Staub oder sonstigem Schmutz durchzuführen ist, ist es im Stand der Technik bekannt, dass zusätzlich zum Wischvorgang eine Reinigungsflüssigkeit (Wasser, meist mit Reinigungszusätzen versetzt; im Winter aus Frostschutzgründen häufig mit einem ausreichend hohen Ethanolanteil versetzt) auf die zu reinigende Oberfläche aufgespritzt wird (Wasch-Wisch-Vorgang). Der klassische Aufbau besteht dabei darin, dass von einer oder mehreren feststehenden Düsen (wobei die Düsen zum Beispiel in einem der Windschutzscheibe benachbarten Bereich der Motorhaube angeordnet sind) Reinigungsflüssigkeit auf die zu reinigende Oberfläche gespritzt wird. Nachteilig ist es dabei, dass der Auftreffpunkt der Reinigungsflüssigkeit auf der Windschutzscheibe stark fahrtwindabhängig ist.

Zum Ausgleich der fahrgeschwindigkeitsabhängigen Ablenkung des ausgegebenen Reinigungsflüssigkeitsstrahls wurde in US 6,402,052 B2 vorgeschlagen, an der Motorhaube im Bereich der Windschutzscheibe eine Düsenanordnung mit zwei unterschiedlichen Ausgabedüsen vorzusehen. Die unterschiedlichen Ausgabedüsen werden über ein druckabhängiges Wegeventil mit unterschiedlichen Flüssigkeitsdrücken angesteuert. Durch die unterschiedliche Ausgabeposition in Kombination mit dem unterschiedlichen Flüssigkeitsdruck kann ein vorteilhafter Ausgleich der Fahrtwindabhängigkeit realisiert werden.

Zur Verringerung der Fahrtwindabhängigkeit, aber auch zur Erhöhung der Reinigungsleistung, existieren zwischenzeitlich Systeme, bei denen die Spritzdüsen für die Reinigungsflüssigkeit im Bereich des Wischerblatts angeordnet sind, und sich bei einer Bewegung des Wischers mit dem Wischerblatt mitbewegen. Bei manchen Systemen ist darüber hinaus eine Mehrzahl an Auslassöffnungen für die Reinigungsflüssigkeit vorgesehen, wobei die Auslassöffnungen in einer Reihe längs des Wischerblatts angeordnet sein können, und somit eine Ausgabe von Reinigungsflüssigkeit längs der gesamten Wischerblattlänge erfolgen kann.

Problematisch ist es bei den bekannten Systemen, dass oftmals ein Flüssigkeitsauftrag in Bereichen erfolgt, die sich im Bereich der Rückseite des sich bewegenden Wischerblatts befinden (bezogen auf die aktuelle Bewegungsrichtung des Wischerblatts). Da diese Bereiche erst nach einer Reversierung der Bewegungsrichtung des Wischerblatts erneut vom Wischerblatt erreicht werden, vergeht eine gewisse Zeit, was dazu führen kann, dass die Sicht des Fahrzeugführers beeinträchtigt wird, bzw. Reinigungsflüssigkeit aufgrund des Fahrtwinds bereits teilweise von der Windschutzscheibe abgelaufen ist. Diese Effekte sind nachteilig.

Bei Auslassdüsen, die am Wischerarm angeordnet sind und sich mit diesem bewegen wird teilweise Reinigungsflüssigkeit nur an einer Seite des Wischerblatts ausgegeben. Nachteilig ist dabei, dass eine Wasch-Reinigungswirkung nur in einer Richtung erfolgt und es bei der Rückwärtsbewegung des Wischerblatts auch zu einem Trockenlaufen des Wischerblatts auf der Scheibe kommen kann.

Dementsprechend wurde in jüngster Zeit vorgeschlagen, dass ein Aufsprühen von Reinigungsflüssigkeit wechselseitig auf beiden Seiten des Wischerblatts erfolgt, wobei die Ausgaberichtung im Laufe einer Hin- und Her-Bewegung des Wischerblatts wechselt und jeweils so gewählt ist, dass die ausgegebene Flüssigkeit in der aktuellen Bewegungsrichtung des Wischerblatts unmittelbar vor dem Wischerblatt auf die Windschutzscheibe aufgetragen wird. Hierdurch ergibt sich eine optimale Reinigungswirkung mit geringen Waschwasserverlusten und geringer Sichtbeeinträchtigung des Fahrers.

Rein beispielhaft sind derartige Wischvorrichtungen aus DE 10 2013 209 196 A1, DE 10 2014 226 740 A1 oder DE 10 2020 116 023 A1 bekannt.

Aufgrund des erhöhten Bauaufwandes und zum Teil auch aufgrund des erforderlichen zusätzlichen Bauraums haben sich derartige Wischvorrichtungen mit wechselseitigem Flüssigkeitsauftrag bislang allenfalls im Bereich der Luxusklasse bei Kraftfahrzeugen durchsetzen können. Aber auch hier erfolgt deren Einbau oftmals nicht serienmäßig, sondern lediglich auf Wunsch des Kunden in Form einer kostenpflichtigen Zusatzausstattung.

Dementsprechend besteht im Stand der Technik nicht nur ein Bedarf an zuverlässigeren, kostengünstigeren und/oder Bauraum sparenden Lösungen für Wischsysteme mit wechselseitigem Flüssigkeitsaustrag, sondern insbesondere auch an nachrüstbaren Systemen, sodass eine Umrüstung auf einen wechselseitigen Fluidaustrag auch nach dem Kauf erfolgen kann (sogenannter "after sales market"). Dies setzt natürlich voraus, dass die vermarktete nachrüstbare Basislösung (kein wechselseitiger Fluidaustrag) nicht (oder allenfalls minimal) aufwendiger ist, als eine nicht-nachrüstbare Basislösung. Optimal wäre es darüber hinaus, wenn eine zumindest weitgehende Nachrüstbarkeit von bereits verbauten Wasch-/Wischanlagen möglich wäre (auch wenn dies nur für einen Teil der bereits verbauten Wasch-/Wischsysteme gelten würde). EP 2 411 252 B1 offenbart ein gattungsgemäßes umrüstbares Wischsystem für ein Fahrzeug.

Dementsprechend besteht die Aufgabe der Erfindung darin, ein umrüstbares Wischsystem, insbesondere ein umrüstbares Wischsystem für ein Fahrzeug vorzuschlagen, welches vorteilhafte Eigenschaften aufweist. Eine weitere Aufgabe der Erfindung besteht darin, ein Verfahren zur Umrüstung eines Wischsystems, insbesondere ein Verfahren zur Umrüstung eines Wischsystems für Fahrzeuge, vorzuschlagen, welches vorteilhafte Eigenschaften aufweist.

Die vorliegend vorgeschlagene Erfindung löst diese Probleme.

Es wird vorgeschlagen, ein umrüstbares Wischsystem, insbesondere ein umrüstbares Wischsystem für ein Fahrzeug, welches eine Wischerarmvorrichtung, eine Fluidpumpe, eine Fluidleitung zur fluidischen Verbindung der Fluidpumpe mit der Wischerarmvorrichtung, und eine Steuervorrichtung zur Ansteuerung der Fluidpumpe aufweist, derart auszubilden, dass als Wischerarmvorrichtung wahlweise eine Fluidfixauslass-Wischerarmvorrichtung und eine Fluidwechselauslass-Wischerarmvorrichtung verwendet wird. Dabei wird die Steuervorrichtung wahlweise zumindest in einem Fluidfixauslass-Modus und in einem Fluidwechselauslass-Modus betrieben. Damit ist es insbesondere leicht und kostengünstig möglich, ein Scheiben-Wasch-Wischsystem von einer Einseiten-Fluidauslass-Konfiguration in eine wechselseitige Zweiseiten-Fluidauslass-Konfiguration umzurüsten (und umgekehrt). Ebenso ist es möglich, ein Scheiben-Wasch-Wischsystem leicht und kostengünstig von einer fixen (nicht-wechselseitigen) Zweiseiten-Fluidauslass-Konfiguration in eine wechselseitige Zweiseiten-Fluidauslass-Konfiguration umzurüsten (und umgekehrt). Dabei ist es insbesondere von Vorteil, dass die relevanten Komponenten oftmals ohnehin bereits verwendet werden, insbesondere im Fahrzeugbau (Kraftfahrzeugbau). So ist es heutzutage oftmals ohnehin Standard, ein Wischsystem durch eine Steuervorrichtung anzusteuern. Bei der Steuervorrichtung kann es sich insbesondere um eine programmierbare elektronische Vorrichtung, wie beispielsweise einen sogenannten "Controller" bzw. einen Einplatinen-Computer oder einen sonstigen Computer handeln. Insbesondere kann die Steuervorrichtung einen Befehle abarbeitenden Prozessor und/oder einen reversibel programmierbaren Speicher aufweisen. Insbesondere kann es sich um einen Flash-Speicher, um EPROMs, um EEPROMs oder dergleichen handeln. Dabei ist darauf hinzuweisen, dass die Steuervorrichtung nicht notwendigerweise als gesondertes, separates Bauteil vorgesehen werden muss. Vielmehr ist es ebenso denkbar, dass die entsprechenden Programmschritte auf einer ohnehin vorgesehenen programmierbaren elektronischen Steuervorrichtung ablaufen, insbesondere in Form einer Multitasking-Anwendung. Derartige elektronisch programmierbare Steuervorrichtungen werden im Fahrzeugbau in aller Regel oftmals ohnehin verwendet. Eine entsprechende Ansteuerung der sonstigen Komponenten der Wischvorrichtung (sowie gegebenenfalls auch eine Rückkopplung, derart, dass die angesteuerten Komponenten Betriebszustandsdaten bzw. Sensordaten an die elektronische Steuervorrichtung zurückkoppeln) kann dabei entweder durch gesonderte Steuerleitungen bzw. Datenleitungen, oder aber auch durch Datenübertragungssysteme, insbesondere Bussysteme, speziell sogenannte CAN-Bussysteme erfolgen. Auch hierbei handelt es sich um im Fahrzeugbau häufig verwendete Lösungen. Bei der Fluidpumpe kann es sich insbesondere um eine elektrisch angesteuerte Fluidpumpe handeln. Auch derartige Fluidpumpen werden im Stand der Technik regelmäßig verwendet. Insbesondere kann die Fluidpumpe durch Anlegen von unterschiedlichen Spannungen mit unterschiedlichen Drehzahlen betrieben werden. Gegebenenfalls kann die Fluidpumpe auch zusätzlich oder alternativ durch Umpolen mit unterschiedlichen Drehrichtungen angetrieben werden. Dabei ist darauf hinzuweisen, dass bei heutigen Wischsystemen die Fluidpumpen häufig eine gewisse Vorzugsrichtung aufweisen, derart, dass bei gleicher Drehzahl in einer Drehrichtung ein höherer Fluiddurchsatz erfolgt, wohingegen in der umgekehrten Drehrichtung ein geringerer (aber nach wie vor vorhandener) Fluiddurchsatz erfolgt. Auch Wischerarmvorrichtungen, die in der Regel mittels eines zusätzlichen Elektromotors, welcher meist als sogenannter Reversiermotor ausgebildet ist, angetrieben werden, sind im Stand der Technik bei typischen Bauweisen regelmäßig vorhanden. Auch bei diesen Elektromotoren ist es oftmals ohnehin der Fall, dass sie von einer Steuervorrichtung (beispielsweise Einplatinencomputer) angesteuert werden, insbesondere auch mittels eines Datenübertragungssystems. Bei der Fluidleitung handelt es sich in aller Regel zumindest abschnittsweise um eine flexible Schlauchleitung, welche beispielsweise PVC-Materialien, Gummimaterialien oder Silikonmaterialien enthalten kann, bzw. aus derartigen Materialien ausgebildet sein kann. Zumindest in manchen Bereichen ist auch an starre Fluidleitungen in Form von Rohren, insbesondere an Kunststoffrohre, Metallrohre und dergleichen, zu denken. Übergänge können mittels Aufstecken von Schläuchen an Flanschstutzen oder unter Verwendung sonstiger im Stand der Technik bekannter Fluidverbindungsmittel, wie Fluidsteckverbindungen und dergleichen, realisiert werden.

Bei herkömmlichen Wischsystemen handelt es sich zumindest derzeit in der Regel um Fluidfixauslass-Wischsysteme. Bei diesen wird das Reinigungsfluid typischerweise unabhängig von der aktuellen Bewegungsrichtung der Wischerarmvorrichtung auf die zu reinigende Oberfläche ausgegeben. Dabei kann es sich um Fluidauslassdüsen handeln, welche sich nicht mit der Wischerarmvorrichtung mitbewegen. Beispielsweise fallen Fluidauslassdüsen, welche unabhängig von den Wischerarmvorrichtungen ausgebildet sind und beispielsweise an der Karosserie befestigt sind (typischerweise in einem Bereich der Motorhaube, welcher der Windschutzscheibe benachbart liegt, sofern es sich bei der zu reinigenden Oberfläche um die Windschutzscheibe handelt), hierunter. Es kann sich aber auch um Fluidfixauslass-Wischsysteme handeln, bei denen eine oder mehrere Fluidauslassdüsen derart angeordnet sind, dass sie sich zusammen mit der Wischerarmvorrichtung bewegen (wobei diese Fluidauslassdüsen zusätzlich oder optional zu Fluidauslassdüsen vorgesehen werden können, welche beispielsweise an der Karosserie befestigt sind). Grundsätzlich ist es dabei beliebig, ob ein Fluidaustrag lediglich auf einer Seite, oder auf beiden Seiten der Wischerarmvorrichtung erfolgt.

Teilweise sind die Systeme auch so ausgebildet, dass eine Fluidausgabe lediglich auf einer Seite der Wischerarmvorrichtung erfolgt, und gegebenenfalls darüber hinaus auch nur zeitweise erfolgt, insbesondere nur dann, wenn sich die Wischerarmvorrichtung in Richtung der Seite bewegt, auf der der Fluidaustrag erfolgt bzw. erfolgen kann. Bewegt sich die Wischerarmvorrichtung in entgegengesetzter Richtung, erfolgt typischerweise kein bzw. allenfalls ein stark reduzierter Fluidaustrag. In jedem Fall verhält es sich beim Vorhandensein einer Steuervorrichtung so, dass diese das Wischsystem in einem Fluidfixauslass-Modus (mit gegebenenfalls wiederholt auftretendem, zeitweisem Fluidaustrag) ansteuert. Lediglich der Vollständigkeit halber wird darauf hingewiesen, dass es bei sämtlichen Wischsystemen üblich ist, dass nach Abschalten der Fluidpumpe bzw. nach Beendigung des Fluidaustrags die Wischerarmvorrichtungen noch eine gewisse Zeit nachlaufen, um die zu reinigende Oberfläche vom Reinigungsfluid zu befreien.

Gemäß dem vorliegend gemachten Vorschlag kann nun bei einem Wischsystem mit einer Fluidfixauslass-Wischerarmvorrichtung das Wischsystem durch ein einfaches Ersetzen der Fluidfixauslass-Wischerarmvorrichtung mit einer Fluidwechselauslass-Wischerarmvorrichtung auf ein System umgerüstet werden, bei dem der Fluidaustrag in Abhängigkeit von der Bewegungsrichtung der Wischerarmvorrichtung erfolgt (Fluidwechselauslass-Wischsystem). Insbesondere kann durch einen Wechsel der Fluidausgabeseite (insbesondere bei Wischsystemen, bei denen sich die Fluidaustragsdüsen mit der Wischerarmvorrichtung mitbewegen) die Reinigungsflüssigkeit stets in die Richtung ausgegeben werden, in die sich die Wischerarmvorrichtung aktuell bewegt (Vorderseite der Bewegungsrichtung; Luv-Seite der Bewegungsrichtung). Hierdurch ist es möglich, eine maximale Reinigungswirkung bei minimaler Sichtbeeinträchtigung des Fahrers durch auf der Windschutzscheibe befindliche Reinigungsflüssigkeit zu erzielen. Die Komplexität des Austauschs der Wischerarmvorrichtung kann dabei von der jeweiligen Konstruktionsweise des zugrundeliegenden Wischsystems abhängen. Beispielsweise ist es denkbar, dass bei einer Wischerarmvorrichtung, welche zweiteilig aufgebaut ist, nicht nur das Wischerblatt, sondern zusätzlich oder alternativ auch die Haltearmvorrichtung ausgetauscht werden muss. In der Regel weist eine Fluidfixauslass-Wischerarmvorrichtung eine direkte und/oder fixe und/oder nicht-schaltbare und/oder nicht (einfach) veränderliche fluidische Verbindung zwischen ihrem Fluideinlass/ihren Fluideinlässen und ihrem Fluidauslass/ihren Fluidauslässen (Fluidaustragsdüse(n) ) auf. Mit anderen Worten ist typischerweise kein Fluidsteuerventil, insbesondere kein (druckabhängiges) Wegeventil vorgesehen. Demgegenüber ist typischerweise (nur) bei einer Fluidwechselauslass-Wischerarmvorrichtung ein Fluidsteuerventil, insbesondere ein (druckabhängiges) Wegeventil vorgesehen, sodass es möglich ist, die fluidische Verbindung zwischen ihrem Fluideinlass/ihren Fluideinlässen und ihrem Fluidauslass/ihren Fluidauslässen variabel/schaltbar/steuerbar/veränderbar anzupassen bzw. zu ändern. Möglich ist es aber auch, dass bei einer zweiteilig ausgebildeten Wischerarmvorrichtung lediglich die Wischerblattvorrichtung auszutauschen ist. Unabhängig davon ist es in der Regel erforderlich, die Ansteuerung des Wischsystems geeignet anzupassen, also die Steuervorrichtung in einem Fluidwechselauslass-Modus zu betreiben (anstelle eines Fluidfixauslass-Modus). Dies kann durch Neuprogrammierung bzw. Umprogrammierung der Steuervorrichtung realisiert werden. Denkbar ist es auch, dass zusätzlich oder alternativ durch Eingabe eines Freischaltscodes eine entsprechende Funktionalität freigeschaltet werden kann. Dies kann beispielsweise nach Zahlung einer entsprechenden Lizenzgebühr erfolgen (sogenannter "after sales market"). Das Aufspielen des Codes kann dabei in einer Werkstatt erfolgen, oder aber auch durch sogenannte "over the air updates" erfolgen. Denkbar ist es auch, dass die Autorisierung zum Betrieb der Wischvorrichtung in einem Fluidwechselauslass-Modus durch das Anbringen einer entsprechenden Fluidwechselauslass-Wischerarmvorrichtung selbst (bei zweiteilig ausgebildeten Wischerarmvorrichtung durch Anbringen einer entsprechenden Haltearmvorrichtung und/oder Wischerblattvorrichtung) autorisiert wird. Möglich ist es in diesem Zusammenhang insbesondere, dass auf einer Fluidwechselauslass-Wischerblattvorrichtung beispielsweise ein QR-Code aufgedruckt ist, der als Autorisierungsmittel bzw. als Freischaltmittel für einen Fluidwechselauslass-Modus fungiert. Der QR-Code kann von einer auf einem Smartphone installierten, speziellen App eingelesen werden (die beispielsweise vom Fahrzeughersteller bereitgestellt wird). Die App leitet die Information bezüglich einer durchzuführenden Betriebsänderung auf einen Fluidwechselauslass-Modus an einen Server weiter, der wiederum über eine "over the air update"-Funktionalität das Wischsystem in einen Fluidwechselauslass-Modus schaltet. In diesem Zusammenhang soll erwähnt werden, dass es durchaus vorteilhaft sein kann, wenn die Fluidfixauslass-Wischerarmvorrichtung und die Fluidwechselauslass-Wischerarmvorrichtung (zumindest teilweise) unterschiedlich ausgebildet sind. Dies kann Irritationen seitens der Kunden vermeiden, weil Kosten dafür verlangt werden, dass eine lediglich softwaremäßige Blockade einer ohnehin vorhandene Hardware-Funktionalität freigeschaltet wird. Eine hardwaremäßige Umrüstung wird dagegen üblicherweise bereitwilliger akzeptiert.

Erneut wird darauf hingewiesen, dass wesentliche Komponenten des vorliegend vorgeschlagenen umrüstbaren Wischsystems (oder sogar - im Wesentlichen - alle der in einem Fluidfixauslass-Modus erforderlichen Komponenten des umrüstbaren Wischsystems) bei zumindest einem Teil der bereits im Feld vorhandenen Wischsysteme ohnehin vorhanden sind. Dementsprechend kann das vorgeschlagene umrüstbare Wischsystem als sogenannte drop-in Lösung für zumindest einen Teil der bereits vorhandenen Wischsysteme verwendet werden. Ebenso ist es möglich, dass zumindest bei einem Teil der derzeit verbauten Wischsysteme diese durch vergleichsweise geringfügige Änderungen so angepasst werden können, dass diese als vorliegend vorgeschlagenes umrüstbares Wischsystem verwendet werden können. Letzteres betrifft insbesondere den bereits erwähnten Fall, bei dem die Fluidfixauslass-Wischerarmvorrichtung und die Fluidwechselauslass-Wischerarmvorrichtung unterschiedlich ausgebildet sind.

Weiterhin wird vorgeschlagen, das umrüstbare Wischsystem derart auszubilden, dass die Steuervorrichtung beim Vorhandensein einer Fluidfixauslass-Wischerarmvorrichtung in einem Fluidfixauslass-Modus betrieben wird, und beim Vorhandensein einer Fluidwechselauslass-Wischerarmvorrichtung in einem Fluidwechselauslass-Modus betrieben wird. Wie bereits erwähnt, kann der Wechsel entweder manuell initiiert werden, also beispielsweise durch eine geeignete Umprogrammierung der Steuervorrichtung und/oder durch Eingabe eines entsprechenden Freischaltcodes. Zusätzlich oder alternativ ist es auch denkbar, dass ein automatisiertes Umschalten erfolgt, beispielsweise dahingehend, dass das Vorhandensein einer Fluidfixauslass-Wischerarmvorrichtung bzw. einer Fluidwechselauslass-Wischerarmvorrichtung automatisiert detektiert wird und dementsprechend ein automatisierter Wechsel zwischen einem Fluidfixauslass-Modus und einem Fluidwechselauslass-Modus der Steuervorrichtung erfolgt.

Weiterhin wird vorgeschlagen, dass bei dem umrüstbaren Wischsystem die Wischerarmvorrichtung eine Haltearmvorrichtung und/oder eine Wischerblattvorrichtung aufweist, wobei vorzugsweise die Haltearmvorrichtung und die Wischerblattvorrichtung mittels eines Befestigungsmittels reversibel miteinander verbunden werden können. Derartige Wischerarmvorrichtungen stellen den heutigen Standard bei Wischsystemen für Fahrzeuge dar. Hierdurch kann die Akzeptanz des vorliegend vorgeschlagenen umrüstbaren Wischsystems erhöht werden, bzw. gegebenenfalls eine nachträgliche Umrüstung eines bereits vorhandenen Wischsystems besonders einfach erfolgen. Darüber hinaus ist der Verbrauch an Ressourcen bei einem verschleißbedingten Wechsel von Bauteilen bei einer Fluidwechselauslass-Wischerarmvorrichtung gegenüber dem Ressourcenverbrauch bei einem verschleißbedingten Wechsel von Bauteilen bei einer Fluidfixauslass-Wischerarmvorrichtung nicht (zumindest im Wesentlichen nicht) erhöht, da - wie grundsätzlich bekannt - im Wesentlichen nur solche Bauteile ausgetauscht werden müssen, welche einem besonders hohen Verschleiß unterliegen (in aller Regel das Wischerblatt/die Wischerblattvorrichtung).

Eine weitere Ausbildungsmöglichkeit des umrüstbares Wischsystems ergibt sich, wenn ein Kombinationsverbindungsmittel vorgesehen wird, welches gleichzeitig eine mechanische, sowie eine fluidische Verbindung zweier miteinander zu verbindender Teile bewirkt, insbesondere von Haltearmvorrichtung und Wischerblattvorrichtung, wobei das Kombinationsverbindungsmittel vorzugsweise als reversibles Kombinationsverbindungsmittel ausgeführt ist. Gegebenenfalls kann auch zusätzlich eine elektrische Kontaktierung implementiert werden, wobei sich dies auf eine, zwei, drei, vier oder noch mehr elektrische Kontaktfunktionen/Kontaktfunktionalitäten beziehen kann. Eine elektrische Kontaktierung kann beispielsweise zu Heizzwecken und/oder zur Kontaktierung eines autorisierenden Freischaltmittels erfolgen. Dabei ist es in aller Regel erforderlich, für unterschiedliche Funktionen (wie beispielsweise zu Heizzwecken und zu Freischaltmittel-Zwecken) unterschiedliche elektrische Kontaktpaare vorzusehen (mithin werden im angesprochenen Beispiel zwei elektrische Kontaktfunktionen realisiert). Hierdurch ist es beispielsweise möglich, dass eine Umrüstung des umrüstbaren Wischsystems zwischen Fluidfixauslass-Modus und Fluidwechselauslass-Modus besonders einfach und gegebenenfalls auch ohne größere Systemkenntnisse erfolgen kann und/oder von einem Endverbraucher durchgeführt werden kann. Beispielsweise kann hierfür - zumindest teilweise - ein simples Umstecken der Wischerarmvorrichtung (bzw. der Haltearmvorrichtung und/oder der Wischerblattvorrichtung) genügen. Der Wechsel des Betriebsmodus der Steuervorrichtung kann - wie bereits erwähnt - durch einen entsprechenden Eingabebefehl, durch Eingabe eines Lizenzcodes, durch Umprogrammierung der Steuervorrichtung durch Abfotografieren eines QR-Codes mit einer auf einem Smartphone installierten speziellen App (beispielsweise vom Fahrzeughersteller bereitgestellt) und/oder durch Erkennen eines Freischaltmittels durch ein Erkennungsmittel und anschließende Freischaltung des Fluidwechselauslass-Modus (wobei das Freischaltmittel typischerweise in der Wischerarmvorrichtung, der Haltearmverrichtung bzw. der Wischerblattvorrichtung integriert ist) erfolgen.

Weiterhin wird vorgeschlagen, das umrüstbare Wischsystem derart auszubilden, dass die Wischerarmvorrichtung, insbesondere die Wischerblattvorrichtung, bevorzugt (nur) die Fluidwechselauslass-Wischerarmvorrichtung, weiter bevorzugt (nur) eine Fluidwechselauslass-Haltevorrichtung und/oder (nur) eine Fluidwechselauslass-Wischerblattvorrichtung, ein Wegeventil aufweist, insbesondere ein druckabhängiges Wegeventil, aufweist. Mithilfe eines derartigen Wegeventils kann das vorgeschlagene umrüstbare Wischsystem besonders einfach realisiert werden. Dabei weist eine als Fluidfixauslass-Wischerarmvorrichtung ausgebildete Wischerarmvorrichtung typischerweise kein Wegeventil auf. (Entsprechendes gilt für Fluidfixauslass-Haltevorrichtungen und/oder Fluidfixauslass-Wischerblattvorrichtungen.) Bei dem Wegeventil handelt es sich insbesondere um ein Wegeventil, welches (genau) einen Fluideinlass und (genau) zwei Fluidauslässe aufweist. Dabei kann es sich um gewissermaßen "logische Fluidauslässe" handeln. Es ist also durchaus denkbar, dass ein Fluidauslass des Wegeventils mehrere Ausgabeöffnungen aufweist, welche jedoch fluidisch miteinander korreliert sind, also fluidisch bzw. "logisch" miteinander verbunden sind. Mittels einer Druckabhängigkeit des Wegeventils ist es möglich, dass durch eine unterschiedliche Ansteuerung der Fluidpumpe, und dementsprechend einen unterschiedlichen Ausgabedruck der Fluidpumpe, ein Umschalten des druckabhängigen Wegeventils realisiert werden kann. Hierdurch wird ein besonders einfacher Aufbau des umrüstbaren Wischsystems möglich, bzw. kann das umrüstbare Wischsystem für einen größeren Anteil bereits im Markt befindlicher Wischsysteme genutzt werden.

Weiterhin wird vorgeschlagen, dass bei dem umrüstbaren Wischsystem die Steuervorrichtung den Wechsel zwischen dem Fluidfixauslass-Modus und dem Fluidwechselauslass-Modus durch eine Änderung der Drehzahl und/oder durch eine Änderung der Drehrichtung der Fluidpumpe bewirkt. Hierdurch wird erneut ein besonders einfacher Aufbau des umrüstbaren Wischsystems gefördert, bzw. eine Anwendbarkeit des vorliegenden Vorschlags für eine größere Anzahl von bereits im Markt befindlichen Wischsystemen gefördert. In Bezug auf die Drehrichtung der Fluidpumpe ist darauf hinzuweisen, dass handelsübliche Fluidpumpen für Wischsysteme in der Regel eine Vorzugsdrehrichtung aufweisen. Dementsprechend ergibt sich bei einem Betrieb der Fluidpumpe in einer Richtung ein unterschiedliches Fluidausgabeverhalten (insbesondere des Fluiddrucks) gegenüber einem Betrieb der Fluidpumpe in der Gegenrichtung. Damit nicht nur Fluidpumpen verwendet werden können, bei denen die Ausgestaltung des Förderrads derart ist, dass sich lediglich durch Umkehrung der Drehrichtung und bei gleicher Drehzahl ein geeignetes Fluidausgabeverhalten ergibt, ist es insbesondere möglich, dass zusätzlich zu einer Drehrichtungsumkehr eine Anpassung bei der Drehzahl erfolgt.

Weiterhin wird vorgeschlagen, dass bei dem umrüstbaren Wischsystem zumindest ein Wischerarmvorrichtungs-Antriebsmotor vorgesehen ist, wobei die Steuervorrichtung vorzugsweise den Wischerarmvorrichtungs-Antriebsmotor steuert, ein Betriebszustandsignal und/oder ein Positionssignal von diesem erhält. Dies kann durch gesonderte Datenleitungen und/oder durch die Verwendung von Datenübertragungssystemen (beispielsweise CAN-Bus-Systeme) realisiert werden. Insbesondere kann bei dieser Ausbildung die in Bezug auf die Bewegungsrichtung der Wischerarmvorrichtung jeweils korrekte Ausgaberichtung der Reinigungsflüssigkeit gewählt werden (was insbesondere durch Anlegen eines geeigneten Fluiddrucks an ein druckabhängiges Wegeventil der Wischerarmvorrichtung realisiert werden kann).

Der Deutlichkeit halber wird das folgende mögliche, konkretere Ausführungsbeispiel beschrieben: die (elektronische) Steuervorrichtung steuert den Wischerarmvorrichtungs-Antriebsmotor durch Übermittlung eines entsprechenden Befehls über eine Datenleitung dahingehend an, dass sich die Wischerarmvorrichtung (der "Scheibenwischer") in eine erste Richtung bewegt. Der Wischerarmvorrichtungs-Antriebsmotor meldet der Steuerverrichtung, dass er die Bewegung begonnen hat. Daraufhin steuert die Steuervorrichtung die Fluidpumpe derart an, dass auf der entsprechenden Seite des Wischerblatts eine Fluidausgabe erfolgt. Weiterhin meldet der Wischerarmvorrichtungs-Antriebsmotor der Steuervorrichtung zu gegebener Zeit das Erreichen der Endposition für die erste Bewegungsrichtung. Daraufhin steuert die Steuervorrichtung den Wischerarmvorrichtungs-Antriebsmotor dahingehend an, dass sich die Wischerarmvorrichtung in eine entgegengesetzte, zweite Richtung bewegt. Dies wird der Steuervorrichtung vom Wischerarmvorrichtung-Antriebsmotor bestätigt. Daraufhin steuert die Steuervorrichtung die Fluidpumpe derart an, dass die Fluidausgabe nunmehr auf der entsprechenden, der vorherigen Seite gegenüberliegenden Seite des Wischerblatts erfolgt. Der Wasch-Wisch-Zyklus wird entsprechend weitergeführt, bis eine ausreichende Anzahl an Wasch-Wisch-Zyklen erreicht ist, und der Wasch-Wisch-Zyklus beendet wird. Dabei kann in einen reinen Wisch-Zyklus übergegangen werden, oder nach einem Trockenwischen der Scheibe durch eine geeignete Anzahl an reinen Wisch-Zyklen die Bewegung die Wischerarmvorrichtung gestoppt werden.

Eine weitere Ausgestaltungsmöglichkeit des umrüstbaren Wischsystems ergibt sich, wenn bei dem umrüstbaren Wischsystem im Fluidwechselauslass-Modus die Freisetzung des von der Fluidpumpe geförderten Fluids in einen in Bewegungsrichtung der Wischerarmvorrichtung gesehen nach vorne gerichteten Bereich erfolgt. Insbesondere erfolgt dabei typischerweise keine Ausgabe von Fluid (oder zumindest eine stark verringerte Ausgabe von Fluid) in den in Bewegungsrichtung der Wischerarmvorrichtung gesehen nach hinten gerichteten Bereich. Hierdurch wird einerseits eine besonders effektive Reinigungswirkung erzielt, wobei insbesondere nur wenig Reinigungsflüssigkeit beispielsweise durch den Fahrtwind bedingt ungenutzt abfließt. Darüber hinaus wird die Sichtbeeinträchtigung des Fahrers bei einem Wasch-/Wischvorgang minimiert, weil nur besonders kleine Bereiche der Windschutzscheibe mit Reinigungsflüssigkeit benetzt sind.

Weiterhin wird bei dem umrüstbaren Wischsystem vorgeschlagen, dass die Wischerarmvorrichtung zumindest eine fluidisch mit der Fluidleitung verbundene Fluidauslassdüsenvorrichtung aufweist, wobei vorzugsweise die als Fluidwechselauslass-Wischerarmvorrichtung ausgebildete Wischerarmvorrichtung wenigstens zwei Fluidauslassdüsenvorrichtungen aufweist, welche Fluid in unterschiedliche Richtungen freisetzen und/oder auf unterschiedlichen Seiten der Wischerarmvorrichtung angeordnet sind. Demgegenüber liegt bei einer als Fluidfixauslass-Wischerarmvorrichtung ausgebildeten Wischerarmvorrichtung typischerweise eine fixe, im Wesentlichen unveränderliche fluidische Verbindung zwischen ihrem (zumindest einen) Fluideinlass und ihrem (zumindest einen) Fluidauslass/ihrer Fluidauslassdüse (ihren Fluidauslassdüsen) vor. Erneut kann hierdurch die bereits vorab erwähnte optimale Reinigungswirkung bei optimal genutzter Reinigungsfluidmenge und/oder minimaler Sichtbeeinträchtigung des Fahrzeugführers realisiert werden. Dabei ist es insbesondere auch möglich, dass eine Mehrzahl an Fluidauslassdüsen längs eines Wischerblatts vorgesehen wird (zumindest auf einer Seite des Wischerblatts, bevorzugt jedoch auf beiden Seiten des Wischerblatts). Hierdurch kann eine besonders hohe Reinigungswirkung und/oder eine besonders effektive Nutzung des verwendenden Reinigungsmittels realisiert werden, was jeweils von Vorteil ist.

Weiterhin wird ein umrüstbares Wischsystem vorgeschlagen, bei dem das Wegeventil folgendes aufweist: wenigstens einen Einlasskanal, einen ersten Auslasskanal, einen zweiten Auslasskanal, ein Steuerelement zum Steuern eines Fluidstromes zwischen dem zumindest einen Einlasskanal, dem ersten Auslasskanal und/oder dem zweiten Auslasskanal. Das Steuerelement umfasst dabei wenigstens einen fluiddurchströmbar mit dem zumindest einen Einlasskanal und mit dem ersten Auslasskanal verbundenen ersten Verbindungskanal mit einem ersten Ventilkopf mit einem ersten Vorspannmittel, welcher innerhalb des ersten Verbindungskanals zwischen einer Öffnungsposition stromaufwärts und einer ersten Verschlussposition stromabwärts derart verschiebbar angeordnet ist, dass wenn der am ersten Zylinderkopf wirkende Druck eines durch den ersten Verbindungskanal fließenden Fluids größer als ein erster Schaltdruck *p*₁ ist und somit die Haltekraft des ersten Vorspannmittels übersteigt, der erste Ventilkopf von seiner Öffnungsposition zu der ersten Verschlussposition stromabwärts verschoben wird. Das Steuerelement umfasst weiterhin einen fluiddurchströmbar mit dem Einlasskanal und mit dem zweiten Auslasskanal verbundenen zweiten Verbindungskanal mit einem zweiten Ventilkopf mit einem zweiten Vorspannmittel, welcher innerhalb des zweiten Verbindungskanals zwischen einer Verschlussposition stromaufwärts und einer Öffnungsposition stromabwärts verschiebbar angeordnet ist, sodass, wenn der am zweiten Zylinderkopf wirkende Druck eines durch den zweiten Verbindungskanal fließenden Fluids größer als ein zweiter Schaltdruck *p*₂ ist und somit die Haltekraft des zweiten Vorspannmittels übersteigt, der zweite Ventilkopf von seiner Verschlussposition zu seiner Öffnungsposition stromabwärts verschoben wird. Hierbei ist der erste Verbindungskanal so ausgebildet, dass er bei einer Bewegung des ersten Ventilkopfs von seiner Öffnungsposition zu seiner Verschlussposition geschlossen wird, wobei der zweite Verbindungskanal so ausgebildet ist, dass er bei einer Bewegung des zweiten Ventilkopfs von seiner Verschlussposition zu seiner Öffnungsposition geöffnet wird. Die Begriffe "Öffnen" und "Schließen" betreffen dabei insbesondere die Möglichkeit eines Fluiddurchgangs durch den betreffenden Verbindungskanal am betreffenden Ventilkopf vorbei, bzw. eine Verhinderung eines derartigen Fluiddurchgangs.

Das vorgeschlagene Wegeventil entspricht einem Wegeventil, wie es in der deutschen Patentanmeldung DE 102021 125 959.2 beschrieben ist. Der Offenbarungsgehalt dieser Anmeldung soll dabei vollumfänglich Teil dieser Anmeldung sein. Dies betrifft insbesondere die dort beschriebenen Vorteile, Eigenschaften und Weiterbildungen des Wegeventils. Ein derartiges Wegeventil ist besonders geeignet, um für das vorliegend vorgeschlagene umrüstbare Wischsystem verwendet zu werden.

Darüber hinaus ähnelt das vorliegend vorgeschlagene Ventil dem in US 6,402,052 B1 beschriebenen Ventil.

Zusätzlich oder alternativ wird bei dem umrüstbaren Wischsystem vorgeschlagen, dass ein Wegeventil verwendet wird, welches folgendes aufweist: einen Einlasskanal, einen ersten Auslasskanal und einen zweiten Auslasskanal, einen ersten Verbindungskanal, der den Einlasskanal mit dem ersten Auslasskanal verbindet, einen zweiten Verbindungskanal, der den Einlasskanal mit dem zweiten Auslasskanal verbindet, ferner eine Schalteinheit, umfassend einen im Einlasskanal zwischen einer ersten und einer zweiten Position verschiebbaren Kolben. In der ersten Position des Kolbens besteht eine Fluidverbindung vom Einlasskanal über den ersten Verbindungskanal zum ersten Auslasskanal und in der zweiten Position des Kolbens besteht eine Fluidverbindung vom Einlasskanal über den zweiten Verbindungskanal zum zweiten Auslasskanal.

Das vorgeschlagene Wegeventil entspricht einem Wegeventil, wie es in der deutschen Patentanmeldung DE 102020 116 023.2 beschrieben ist. Der Offenbarungsgehalt dieser Anmeldung soll dabei vollumfänglich Teil dieser Anmeldung sein. Dies betrifft insbesondere die dort beschriebenen Vorteile, Eigenschaften und Weiterbildungen des Wegeventils. Auch ein derartiges Wegeventil kann sich im Zusammenhang mit dem vorliegend vorgeschlagen umrüstbaren Wischsystem als besonders geeignet erweisen. Auch hier soll der gesamte Offenbarungsgehalt der Anmeldung als Teil der vorliegenden Beschreibung und/oder Offenbarung angesehen werden.

Wie bereits erwähnt, wird ein derartiges Wegeventil typischerweise lediglich/nur bei einer Fluidwechselauslass-Wischerarmvorrichtung des Wischsystems vorgesehen.

Schließlich wird ein Verfahren zum Umrüsten eines Wischsystems vorgeschlagen, insbesondere ein Verfahren zum Umrüsten eines Wischsystems für ein Fahrzeug, welches eine als Fluidfixauslass-Wischerarmvorrichtung ausgebildete Wischerarmvorrichtung, eine Fluidpumpe, eine Fluidleitung zur fluidischen Verbindung der Fluidpumpe mit der Wischerarmvorrichtung und eine in einem Fluidfixauslass-Modus betriebene Steuervorrichtung zur Ansteuerung der Fluidpumpe aufweist, wobei die Fluidfixauslass-Wischerarmvorrichtung durch eine Fluidwechselauslass-Wischerarmvorrichtung ersetzt wird, und die Steuervorrichtung von dem Fluidfixauslass-Modus in einen Fluidwechselauslass-Modus umgestellt wird. Ein derartiges Verfahren kann insbesondere im Zusammenhang mit einem vorab beschriebenen umrüstbaren Wischsystem verwendet werden. Das entsprechende Verfahren kann dabei die gleichen Eigenschaften und Vorteile aufweisen, wie das vorab beschriebene umrüstbare Wischsystem. Zusätzlich oder alternativ kann das vorgeschlagene Verfahren im Sinne der vorliegenden Beschreibung weitergebildet werden, zumindest in Analogie.

Zusätzlich oder alternativ wird ein Verfahren zum Umrüsten eines Wischsystems vorgeschlagen, insbesondere ein Verfahren zum Umrüsten eines Wischsystems für ein Fahrzeug, welches eine als Fluidwechselauslass-Wischerarmvorrichtung ausgebildete Wischerarmvorrichtung, eine Fluidpumpe, eine Fluidleitung zur fluidischen Verbindung der Fluidpumpe mit der Wischerarmvorrichtung und eine in einem Fluidwechselauslass-Modus betriebene Steuervorrichtung zur Ansteuerung der Fluidpumpe aufweist, wobei die Fluidwechselauslass-Wischerarmvorrichtung durch eine Fluidfixauslass-Wischerarmvorrichtung ersetzt wird, und die Steuervorrichtung von dem Fluidwechselauslass-Modus in einen Fluidfixauslass-Modus umgestellt wird. Auch dieses Verfahren kann insbesondere im Zusammenhang mit einem vorab beschriebenen umrüstbaren Wischsystem verwendet werden. Das entsprechende Verfahren kann dabei die gleichen Eigenschaften und Vorteile aufweisen, wie das vorab beschriebene umrüstbare Wischsystem. Zusätzlich oder alternativ kann das vorgeschlagene Verfahren im Sinne der vorliegenden Beschreibung weitergebildet werden, zumindest in Analogie.

In der nachfolgenden Beschreibung sind weitere Aspekte und Ausführungsbeispiele der vorliegenden Beschreibung offenbart. Gleiche Bezugszeichen bezeichnen einander entsprechende ähnliche oder gegebenenfalls auch identische Teile. Das Wischsystem ist in seiner Ausführung aber nicht auf die gezeigten spezifischen Ausführungsbeispiele beschränkt. Die verschiedenen Aspekte und Merkmale, die in den Ausführungsbeispielen offenbart sind, können durch einen Fachmann auf verschiedene Arten kombiniert werden, um einen oder mehrere Vorteile der vorliegenden Erfindung zu erzielen. Insbesondere ist es auch möglich einzelne geeignete Merkmale und Eigenschaften aus den detailliert beschriebenen Ausführungsbeispielen herauszunehmen und zusammen mit der generischen Beschreibung der vorliegenden Offenbarung zu kombinieren.

Bei der folgenden Beschreibung exemplarisch herausgegriffener Ausführungsbeispiele wird auf die Zeichnungen Bezug genommen, welche zeigen:
- Fig. 1:: eine schematische perspektivische Ansicht einer Wischvorrichtung für die Windschutzscheibe eines Kraftfahrzeugs;
- Fig. 2:: eine Fluidfixauslass-Wischerarmvorrichtung in schematischer Draufsicht in unterschiedlichen Bewegungsrichtungen;
- Fig. 3:: eine Wischerblattvorrichtung der Fluidfixauslass-Wischerarmvorrichtung gemäß Fig. 2 in schematischer perspektivischer Ansicht von schräg unten;
- Fig. 4:: eine Fluidwechselauslass-Wischerarmvorrichtung in schematischer Draufsicht in unterschiedlichen Bewegungsrichtungen;
- Fig. 5:: eine Wischerblattvorrichtung der Fluidwechselauslass-Wischerarmvorrichtung gemäß Fig. 4 in einer schematischen perspektivischen Ansicht von schräg unten;
- Fig. 6:: ein Flussdiagramm für ein Verfahren zum Umrüsten eines umrüstbaren Wischsystems;
- Fig. 7:: ein erstes Ausführungsbeispiel für ein druckabhängiges Wegeventil in einer schematischen Querschnittsansicht;
- Fig. 8:: ein zweites Ausführungsbeispiel für ein druckabhängiges Wegeventil in einer schematischen Querschnittsansicht.

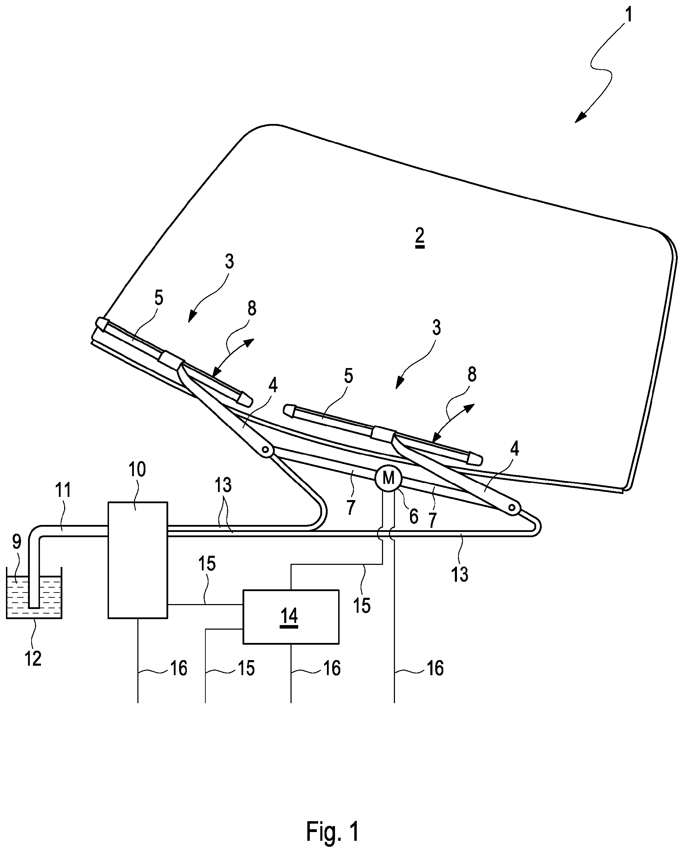

In Fig. 1 ist ein grundsätzlich als solches im Stand der Technik bekanntes Wischsystem 1 für die Windschutzscheibe 2 eines Kraftfahrzeugs dargestellt. Das Wischsystem 1 ermöglicht einen reinen Wischprozess zum Entfernen von Flüssigkeit (bzw. sonstigen Materialien), wie beispielsweise Regenwasser, Spritzwasser oder Schnee. Bei diesem reinen Wischprozess bewegen sich lediglich die beiden Wischerarmvorrichtungen 3 hin und her. Zusätzlich ermöglicht das Wischsystem 1 einen Wasch-Wischprozess, bei dem zusätzlich zum Wischprozess auch ein Auftrag von Reinigungsflüssigkeit 9 auf die Windschutzscheibe 1 erfolgt.

Wie im Stand der Technik üblich bestehen die Wischerarmvorrichtungen 3 im Wesentlichen aus einem Haltearm 4, an dem jeweils ein Wischerblatt 5 lösbar befestigt ist, beispielsweise unter Verwendung eines clipsartigen Verrastungsmittels. Dank des clipsartigen Verrastungsmittels können die Wischerblätter 5 problemlos auch von einem Fahrzeugführer gewechselt werden, wenn das Wischergebnis mit der Zeit unbefriedigend wird. Dies ist nicht weiter ungewöhnlich, da die Wischerblätter 5 (insbesondere die Gummilippen 19) aufgrund der Reibbewegung gegenüber der Windschutzscheibe 1 vergleichsweise schnell verschleißen.

Der Antrieb der Wischerarme 3 erfolgt durch einen Elektromotor, der vorliegend als Reversiermotor 6 ausgebildet ist. Die Bewegung des Reversiermotors 6 wird über Antriebsstangen 7 in eine Schwenkbewegung der Wischerarmvorrichtungen 3 umgesetzt. Die Verschwenkbewegung 8 der Wischerarmvorrichtungen 3 ist mit einem Doppelpfeil angedeutet.

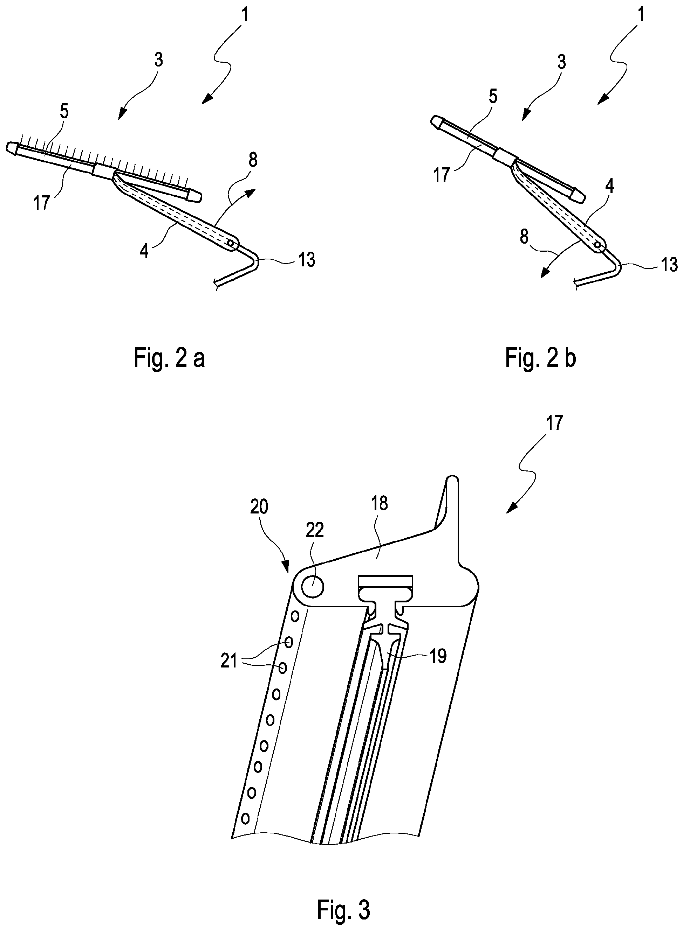

Um bei einem Wasch-Wischvorgang einen Fluidaustrag an Reinigungsflüssigkeit 9 zu bewirken ist eine Fluidpumpe 10 vorgesehen, die über eine Ansaugleitung 11 die in einem Vorratsbehälter 12 befindliche Reinigungsflüssigkeit 9 ansaugt und über flexible Schlauchleitungen 13 an die Spritzdüsen 21 leitet. Beim vorliegend dargestellten Wischsystem 1 ist eine Mehrzahl an Spritzdüsen 21 vorgesehen, welche jeweils in geeigneten Abständen zueinander längs der Wischerblätter 5 angeordnet sind. Die Spritzdüsen 21 bewegen sich somit mit den Wischerarmvorrichtungen 3, bzw. den Wischerblättern 5, mit. Aus darstellungstechnischen Gründen sind die Spritzdüsen 21 in Fig. 1 nicht näher dargestellt, deren Anordnung und Funktion wird jedoch im Folgenden unter Bezugnahme auf die Figs. 2 bis 5 noch näher erläutert.

Das Wischsystem 1 wird vorliegend - wie mittlerweile im Kraftfahrzeugbau weit verbreitet - durch eine programmierbare elektronische Steuerung 14 angesteuert. Der Vollständigkeit halber wird darauf hingewiesen, dass die programmierbare elektronische Steuerung 14 in aller Regel auch weitere Funktionen des Kraftfahrzeugs steuert.

Die programmierbare elektronische Steuerung 14 kommuniziert über Datenleitungen 15 mit dem Reversiermotor 6 und der Fluidpumpe 10. Hierbei werden nicht nur Steuerbefehle übertragen, also beispielsweise ein Befehl, dass die Fluidpumpe 10 in einer bestimmten Drehrichtung des Fluidpumpenförderrads mit einer bestimmten Leistung Reinigungsflüssigkeit 9 pumpen soll. Vielmehr werden die Datenleitungen 15 auch dazu verwendet Fehlermeldungen der angesteuerten Vorrichtungen zurückzumelden, sowie einen Statuszustand und gegebenenfalls auch zusätzliche Sensordaten zu übermitteln. Obgleich die Datenleitungen 15 vorliegend als separate Datenleitungen dargestellt sind, ist es selbstverständlich auch möglich, Bussysteme zu verwenden, wie insbesondere das im Kraftfahrzeugbau mittlerweile weit verbreitete CAN-Bus-System.

Der Vollständigkeit halber sind in Fig. 1 noch elektrische Versorgungsleitungen 16 zur elektrischen Versorgung der unterschiedlichen Verbraucher 6, 10, sowie der elektronischen Steuerung 14 dargestellt.

Weiterhin ist in Fig. 1 noch eine zusätzliche Datenleitung 15 dargestellt, über die ein Eingabebefehls in die elektronische Steuerung 14 eingegeben wird. Der Befehl wird beispielsweise mittels eines Bediennebels von einem Fahrzeugführer gegeben. Auch hier kann ein CAN-Bussystem zur Anwendung kommen.

In Fig. 2 ist ein mögliches Ausführungsbeispiel für eine Wischerarmvorrichtung 3 des Wischsystems 1 aus Fig. 1 dargestellt. Die beiden Teilfigs. 2a und 2b von Fig. 2 zeigen dabei die Wischerarmvorrichtung 3 in unterschiedlichen Bewegungszuständen der Wischerarmvorrichtung 3, wobei die jeweilige Bewegungsrichtung 8 durch einen Pfeil angedeutet ist.

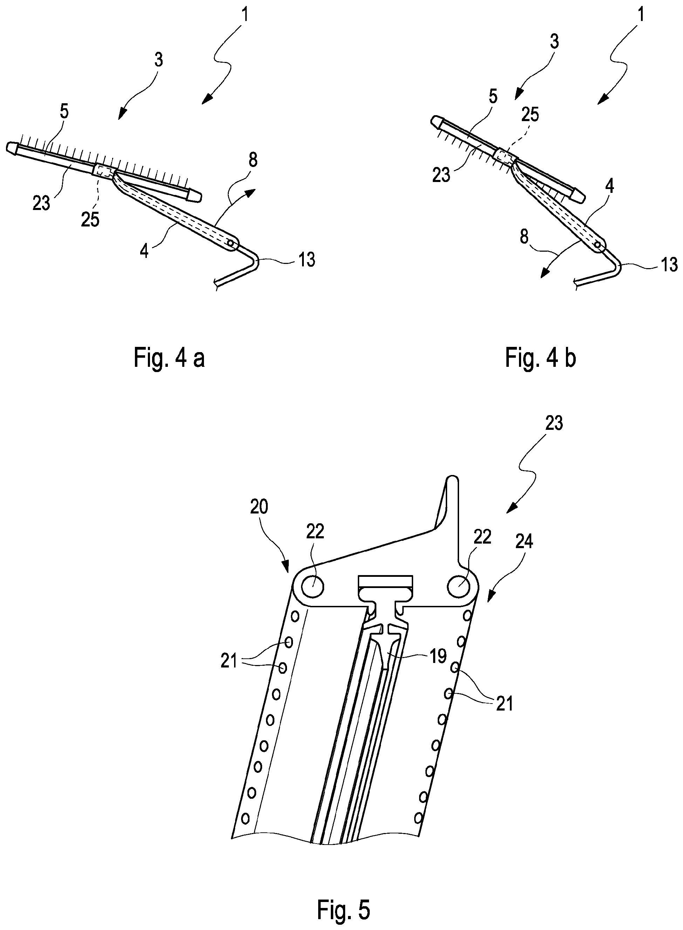

Aus Gründen der vereinfachten Darstellung ist in Fig. 2 jeweils nur eine einzelne Wischerarmvorrichtung 3 dargestellt, obgleich in der Realität typischerweise zwei Wischerarmvorrichtungen 3 für eine Windschutzscheibe 2 (gegebenenfalls auch lediglich eine, drei oder vier Wischerarmvorrichtungen 3) verwendet werden. Ähnliches gilt für Fig. 4, auf die im Folgenden noch näher eingegangen wird.

Wie üblich besteht die Wischerarmvorrichtung 3 im Wesentlichen aus einem Haltearm 4 und einem lösbar daran befestigten Wischerblatt 5, welches vorliegend als Einrichtungs-Wischerblatt 17 ausgebildet ist. Der Aufbau des Einrichtungs-Wischerblatts 17 lässt sich dabei insbesondere auch Fig. 3 entnehmen, welche das Einrichtungs-Wischerblatt 17 in einer schematischen perspektivischen Ansicht von schräg unten darstellt.

Wie grundsätzlich bekannt, weist das Einrichtungs-Wischerblatt 17 einen Haltebereich 18 für die eigentliche Gummilippe 19 auf, die die Windschutzscheibe 2 kontaktiert und trockenwischt.

Auf einer Seite des Einrichtungs-Wischerblatts 17 ist eine Düsenreihe 20 ausgebildet, welche mit einer Vielzahl von zueinander beabstandeten Spritzdüsen 21 versehen ist. Die Spritzdüsen 21 erstrecken sich dabei vorzugsweise über die gesamte Breite des Einrichtungs-Wischerblatts 17 bzw. der Gummilippe 19. Zur fluidischen Verbindung der Spritzdüsen 21 miteinander ist ein Flüssigkeitskanal 22 vorgesehen (welcher selbstverständlich endseitig fluiddicht verschlossen ist). Der Flüssigkeitskanal 22 wird über eine Schlauchleitung 13 von der Fluidpumpe 10 mit Reinigungsflüssigkeit 9 versorgt. Im Bereich des Haltearms 4 ist die Schlauchleitung 13 im Inneren des Haltearms 4 geführt, somit von außen nicht sichtbar und dementsprechend in Fig. 2 gestrichelt eingezeichnet. Lediglich der Vollständigkeit halber wird darauf hingewiesen, dass selbstverständlich auch Bauformen möglich sind, bei denen ein kleinerer oder auch ein größerer Teil der Schlauchleitung 13 außerhalb des Haltearms 4 geführt wird, und somit von außen sichtbar ist.

Beim vorliegenden Einrichtungs-Wischerblatt 17 liegt eine direkte, im Wesentlichen unveränderliche fluidische Verbindung zwischen Fluideinlass und Fluidauslass vor. Es handelt sich also typischerweise um eine einfache Schlauchleitung 13, in der insbesondere kein Wegeventil vorgesehen ist (im Gegensatz zum im Folgenden näher beschriebenen Zweirichtungs-Wischerblatt 23).

Beim vorliegend dargestellten Ausführungsbeispiel eines Wischsystems 1 erfolgt ein Austrag von Reinigungsflüssigkeit 9 nur dann, wenn sich die Wischerarmvorrichtung 3 wie in Fig. 2a gezeigt im Uhrzeigersinn bewegt (Verschwenkbewegung 8). Dies ist durch die Striche in Fig. 2a angedeutet. Dementsprechend erfolgt der Austrag an Reinigungsflüssigkeit 9 in der Bewegungsrichtung 8 der Wischerarmvorrichtung 3 so, dass die Gummilippe 19 nach kurzer Zeit die aufgetrage Reinigungsflüssigkeit 9 von der Windschutzscheibe 2 abwischt. Es ist einsichtig, dass das Einrichtungs-Wischerblatt 17 so positioniert ist, dass die Düsenreihe 20 auf der Seite positioniert ist, auf der der Austrag an Reinigungsflüssigkeit 9 erfolgt (in Fig. 2a längs der nach rechts oben weisenden Breitseite des Einrichtungs-Wischerblatts 17). Dementsprechend wird die Fluidpumpe 10 nur dann betrieben, wenn die Schwenkbewegung 8 im Uhrzeigersinn erfolgt.

Wird jedoch die Wischerarmvorrichtung 3 entgegen des Uhrzeigersinns bewegt (siehe Fig. 2b), so wird die Fluidpumpe 10 abgeschaltet und es erfolgt keine Austrag an Reinigungsflüssigkeit 9. Dies liegt darin begründet, dass bei der in Fig. 2b dargestellten Bewegungsrichtung 8 die Reinigungsflüssigkeit 9 vergleichsweise lange auf der Windschutzscheibe 2 verbleiben würde, und so die Sicht des Kraftfahrzeugsführers beeinträchtigt würde. Darüber hinaus würde aufgrund des Fahrtwinds eine nicht unerhebliche Menge an Reinigungsflüssigkeit 9 ungenutzt ablaufen.

Beim Ausführungsbeispiel des Wischsystems 1 gemäß Figs. 4 und 5 ist anstelle eines Einrichtungs-Wischerblatts 17 ein Zweirichtungs-Wischerblatt 23 als Wischerblatt 5 vorgesehen. Das Zweirichtungs-Wischerblatt 23 ist am Haltearm 4 durch die gleiche Clipsvorrichtung, wie sie beim Einrichtungs-Wischerblatt 17 in Fig. 2 verwendet wird, befestigt. Vorliegend erfolgt die Zuführung von Reinigungsflüssigkeit 9 über entsprechende Schlauchleitungen 13, welche durch eine entsprechende Ansteuerung der Fluidpumpe 10 mit Reinigungsflüssigkeit 9 versorgt werden.

Wie insbesondere aus Fig. 5 ersichtlich ist, welche eine perspektivische schematische Draufsicht auf das Zweirichtungs-Wischerblatt 23 von schräg unten darstellt, weist das Zweirichtungs-Wischerblatt 23 zwei Düsenreihen 20, 24 an beiden Seiten der Gummilippe 19 auf. Die beiden Düsenreihen 20, 24 werden durch entsprechende Flüssigkeitskanäle 22 von der Fluidpumpe 10 mit der Reinigungsflüssigkeit 9 versorgt. Analog zum Einrichtungs-Wischerblatt 17 weisen die beiden Düsenreihen 20, 24 eine Vielzahl von zueinander beabstandeten Spritzdüsen 21 auf, welche in Längsrichtung beidseitig entlang des Zweirichtungs-Wischerblatts 23 ausgebildet sind.

Wie man durch einen Vergleich von Fig. 4a und Fig. 4b sehen kann, erfolgt bei der Bewegung der Wischerarmvorrichtung 3 im Uhrzeigersinn (Bewegungsrichtung 8 in Fig. 4a) über die erste Düsenreihe 20 ein Fluidaustrag in Richtung der Bewegungsrichtung der Wischerarmvorrichtung 3 (bei abgeschalteter zweiter Düsenreihe 24). Dementsprechend erfolgt ein Austrag von Reinigungsflüssigkeit 9 unmittelbar vor der Gummilippe 19 des Zweirichtungs-Wischerblatts 23.

Bewegt sich die Wischerarmvorrichtung 3 entgegen des Uhrzeigersinns (Bewegungsrichtung 8 in Fig. 4b), so wird die Versorgung der ersten Düsenreihe 20 mit Reinigungsflüssigkeit eingestellt, und der Austrag von Reinigungsflüssigkeit 9 erfolgt längs der zweiten Düsenreihe 24. Hierdurch wird auch bei einer Bewegung 8 entgegen des Uhrzeigersinns ein Austrag von Reinigungsflüssigkeit 9 unmittelbar vor der Gummilippe 19 realisiert.

Um den Wechsel der Fluidaustragsrichtung zu realisieren, also um einen Wechsel von der ersten Düsenreihe 20 zur zweiten Düsenreihe 24 (und umgekehrt) realisieren zu können, ist im Zweirichtungs-Wischerblatt 23 ein Wegeventil 25 vorgesehen. Dieses ist vorliegend als druckabhängiges Wegeventil 25 ausgebildet. Erfolgt die Versorgung mit Reinigungsflüssigkeit 9 über die Schlauchleitung 13 auf einem ersten Druckniveau (beispielsweie *p* > *p*₂), so schaltet das Wegeventil 25 eine fluidische Verbindung zwischen Schlauchleitung 13 und erster Düsenreihe 20 frei. Wird jedoch die Reinigungsflüssigkeit 9 mit einem niedrigeren zweiten Druckniveau (beispielsweie *p* < *p*₁) über die Schlauchleitung 13 zugeführt, so schaltet das Wegeventil 25 eine fluidische Verbindung zwischen Schlauchleitung 13 und zweiter Düsenreihe 24 frei.

Die unterschiedlichen Druckniveaus können durch Ansteuerung der Fluidpumpe 10 mit einer unterschiedlichen Spannung und/oder mit einer unterschiedlichen Polung (unterschiedliche Bewegungsrichtung des Förderrads der Fluidpumpe 10) realisiert werden.

Da in Bezug auf die Wischvorrichtung 1 lediglich ein Auswechseln der Wischblatts 5 (Austausch des Einrichtungs-Wischerblatts 17 durch ein Zweirichtungs-Wischerblatt 23, bzw. umgekehrt), sowie eine unterschiedliche Ansteuerung der Fluidpumpe 10 durch die Steuereinrichtung 14 erforderlich ist, kann der Umbau durch äußerst einfache Maßnahmen erfolgen. Der Wechsel vom Fluidfixauslass-Modus gemäß Figs. 2 und 3 auf den Fluidwechselauslass-Modus gemäß Fig. 4 kann dabei beispielsweise durch Umprogrammierung der elektronischen Steuerung 14, durch Eingabe eines entsprechenden Codes in einer Werkstatt, durch sogenannte "over the air updates", oder sonstige Maßnahmen erfolgen. Auch ist es möglich, dass im Wischerblatt 3 Identifizierungsmerkmale enthalten sind, die durch geeignete Mittel vom Fahrzeug ausgelesen werden können. Rein beispielhaft könnten geeignete Wischerblätter (insbesondere Zweirichtungs-Wischerblätter 23) mit einem geeignet codierten Chip versehen sein, der insbesondere drahtlos mittels Luftspulen ausgelesen werden kann. Auch ist an eine elektrische Steckverbindung zu denken, die beispielsweise im Haltearm 4 vorgesehen ist und geeignete Identifikationsmittel im Wischerblatt 5 (insbesondere in einem Zweirichtungs-Wischerblatt 23) kontaktiert. Denkbar wäre es auch, dass als Identifikationsmittel ein Wischerblatt 5 mit einem QR-Code versehen wird. Der QR-Code kann von einer entsprechenden App mit einem Smartphone eingelesen werden. Der QR-Code stellt dabei die Berechtigung dar, das Wischsystem 1 in einem Fluidwechselauslass-Modus zu betreiben. Die App überträgt dann beispielsweise über das Internet die Berechtigung zum Betrieb des Wischsystems 1 in einem Fluidwechselauslass-Modus an einen zentralen Server, der dann wiederum über ein "over the air update" die entsprechende Funktionalität im Fahrzeug freischaltet.

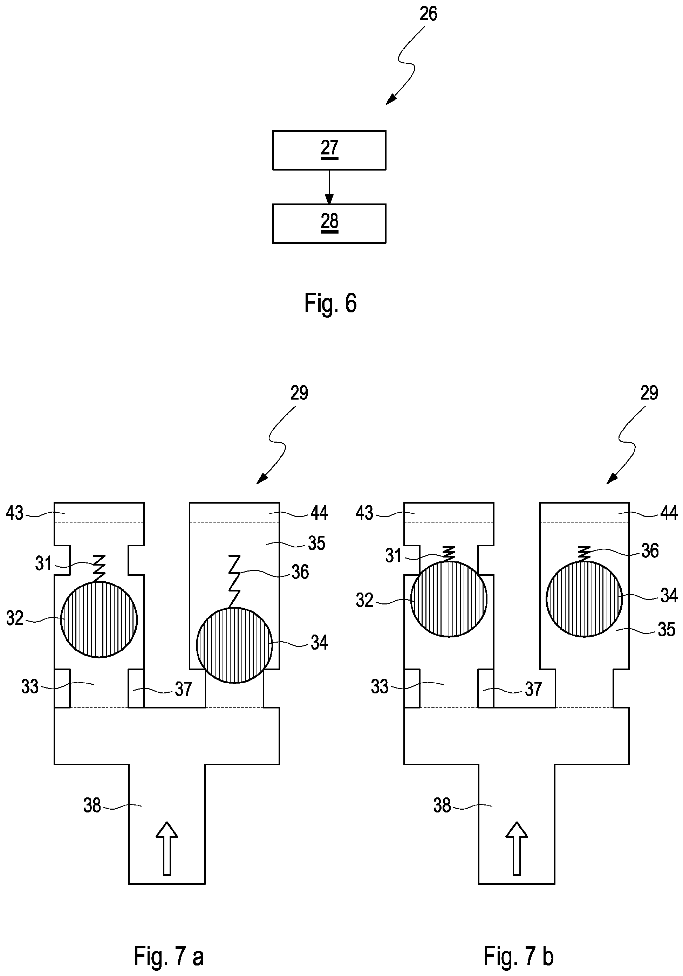

In Fig. 6 ist rein beispielhaft ein Verfahren zum Umrüsten eines Fahrzeugs in Form eines Flussdiagramms 26 skizziert. Dabei wird in einem ersten Schritt 27 die Wischerarmvorrichtung 3 gewechselt, wobei typischerweise lediglich das Wischerblatt 5 gewechselt wird. Beispielsweise werden Einrichtungs-Wischerblätter 17 (üblicherweise ohne Wegeventil) durch Zweirichtungs-Wischerblätter 23 (üblicherweise mit Wegeventil 25) ersetzt (oder umgekehrt).

Anschließend wird in einem zweiten Schritt 28 die elektronische Steuerung 14 umprogrammiert, und beispielsweise von einem Fluidfixauslass-Modus in einen Fluidwechselauslass-Modus verbracht (oder umgekehrt).

In Fig. 7 ist ein erstes denkbares Ausführungsbeispiel für ein Wegeventil 29 dargestellt, welches beispielsweise als Wegeventil 25 im Zweirichtungs-Wischerblatt 23 gemäß Figs. 3 und 4 verwendet werden kann. Fig. 7 zeigt dabei eine schematische Schnittdarstellung eines Wegeventils 29 bei unterschiedlichem Druck p im Einlasskanal 38.

Fig. 7a zeigt einen ersten Schaltzustand des Wegeventils 29. Hier ist der angelegte Druck *p* kleiner als der erste Schaltdruck *p*₁. Da der durch das anströmende Fluid auf das Wegeventil 29 wirkende Druck p die Haltekraft des ersten Vorspannmittels 31 nicht übersteigt, ist der erste Ventilkopf 32 in einer Öffnungsposition und der erste Verbindungskanal 33 ist offen (kann also von einem Fluid durchströmt werden). Der zweite Ventilkopf 34 ist in einer Verschlussposition und der zweite Verbindungskanal 35 geschlossen.

Fig. 7b zeigt das Wegeventil 29 in einem zweiten Schaltzustand. Hier ist der Druck *p* größer als der erste Schaltdruck *p*₁ und der zweite Schaltdruck *p*₂. Dadurch ist der erste Ventilkopf 32 in einer ersten Verschlussposition und der zweite Ventilkopf 34 ist in einer Öffnungsposition (aufgrund des auf den zweiten Ventilkopfs 34 einwirkenden Drucks p ist das zweite Vorspannmittel 36 gestaucht). Dadurch ist der erste Verbindungskanal 33 geschlossen und der zweite Verbindungskanal 35 offen.

Der eingezeichnete Pfeil zeigt dabei in beiden Teilabbildungen Fig. 7a und Fig. 7b die Richtung an, in welche ein Fluid strömt, welches das Wegeventil 29 passiert.

Das Wegeventil 29 ist mit integriertem Rückschlagventil ausgebildet. Sollte der am Wegeventil 29 anliegende Druck p nichtpositiv (p < 0) sein, sitzt der erste Ventilkopf 32 auf einem Rückschlag-Ventilsitz 37 auf. Auch der zweite Ventilkopf 34 sitzt bei diesem nichtpositiven Druck (*p* < 0 < *p*₂) auf seinem Ventilsitz auf. Dadurch befinden sich beide Ventilköpfe 32, 34 in einer Verschlussposition, wodurch der erste Verbindungskanal 33 und der zweite Verbindungskanal 35 geschlossen sind. Beide Ventilköpfe 32, 34 wirken jetzt als Rückströmungssicherung und verhindern so das Zurückfließen von Fluid in den Einlasskanal 38.

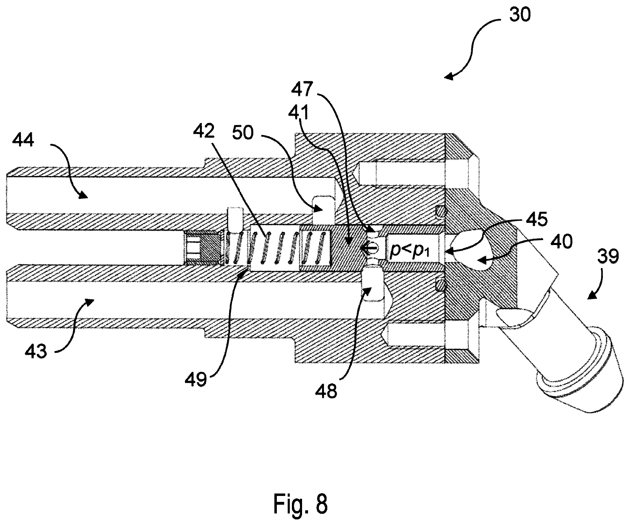

Fig. 8 zeigt ein zweites denkbares Ausführungsbeispiel für ein Wegeventil 30, welches analog zum ersten Ausführungsbeispiel eines Wegeventils 29 gemäß Fig. 7 als Wegeventil 25 im Zweirichtungs-Wischerblatt 23 gemäß Figs. 3 und 4 verwendet werden kann. Fig. 8 zeigt eine Querschnittsdarstellung des zusammengebauten Wegeventils 30, das mit einem Anschlussstutzen 39 versehen ist, auf das ein Schlauch, insbesondere eine flexible Schlauchleitung 13 aufgesteckt werden kann. Der Anschlussstutzen 39 weist in seinem Inneren den Einlasskanal 40 auf, der in eine Kolbenkammer mündet.

In der Kolbenkammer ist ein Rundkolben 41 verschiebbar gelagert. Der Rundkolben 41 wird durch eine Spiralfeder 42 nach rechts gedrückt (Richtung gemäß Darstellung in Fig. 8). Die in Fig. 8 gezeigte Stellung entspricht einer ersten Schaltposition. Sie ergibt sich, wenn die durch die Spiralfeder 42 auf den Rundkolben 41 ausgeübte Kraft größer ist als eine durch den Druck *p* des über den Einlasskanal 40 einströmenden Fluids auf den Rundkolben 41 ausgeübte Kraft. Der Druck *p* des einströmenden Fluids ist also kleiner als ein erster Schaltdruck *p*₁. Es gilt also *p* < *p*₁.

In dieser ersten Schaltposition des Wechselventils 30 ergibt sich eine Fluidverbindung zwischen Einlasskanal 40 und einem ersten Auslasskanal 43 wie folgt: das Fluid strömt über den Einlasskanal 40 in eine Einströmöffnung 45 im Rundkolben 41, weiter durch Verbindungsbohrungen 46 im Rundkolben 41 in eine im Rundkolben 41 ausgebildete Ringnut 47 ein. Die Ringnut 47 fluchtet in der dargestellten ersten Schaltposition des Rundkolbens 41 mit einem ersten Verbindungskanal 48, der wiederum mit dem ersten Auslasskanal 43 fluidisch in Verbindung steht.

Steigt der Druck *p* über den ersten Schaltdruck *p*₁ hinaus an, kann die Spiralfeder 42 den Rundkolben 41 nicht mehr in der dargestellten ersten Schaltposition halten (Position rechts). Dementsprechend bewegt sich der Rundkolben 41 nach links, und die Fluidverbindung zwischen Ringnut 47 und dem erstem Verbindungskanal 48 wird unterbrochen. Da kein Fluid abströmen kann steigt der Druck *p* rasch weiter an, bis ein zweiter Schaltdruck *p*₂ überschritten wird. Das bewirkt, dass der Rundkolben 41 die links befindliche ringförmige Schulter 49 kontaktiert. Dies entspricht einer zweiten Schaltposition des Wechselventils 30.

In dieser zweiten Schaltposition ergibt sich nunmehr eine Fluidverbindung zwischen Einlasskanal 40 und einem zweitem Auslasskanal 44 wie folgt: das Fluid strömt erneut über den Einlasskanal 40 in die Einströmöffnung 45 im Rundkolben 41, weiter durch Verbindungsbohrungen 46 im Rundkolben 41 in die im Rundkolben 41 ausgebildete Ringnut 47 ein. Die Ringnut 47 fluchtet in der dargestellten zweiten Schaltposition des Rundkolbens 41 nunmehr mit einem zweiten Verbindungskanal 50, der wiederum mit dem zweiten Auslasskanal 44 fluidisch in Verbindung steht.

Somit können beide Ausführungsbeispiele von Wechselventilen 29, 30 durch eine Änderung des Drucks des einströmenden Fluids zwischen einem ersten und einem zweiten Auslasskanal 43, 44 umgeschaltet werden. Hierüber kann eine wechselseitige Fluidausgabe über die erste und zweite Düsenreihe 20, 24 am Zweirichtungs-Wischerblatt 23, in Abhängigkeit von dessen Bewegungsrichtung, realisiert werden.

## Patentansprüche

1. Umrüstbares Wischsystem (1), insbesondere für ein Fahrzeug, aufweisend eine Wischerarmvorrichtung (2), eine Fluidpumpe (10), eine Fluidleitung (13) zur fluidischen Verbindung der Fluidpumpe (10) mit der Wischerarmvorrichtung (2) und eine Steuervorrichtung (14) zur Ansteuerung der Fluidpumpe (10),
**dadurch gekennzeichnet, dass** als Wischerarmvorrichtung (3) wahlweise eine Fluidfixauslass-Wischerarmvorrichtung (17) und eine Fluidwechselauslass-Wischerarmvorrichtung (23) verwendet wird, und die Steuervorrichtung (14) wahlweise zumindest in einem Fluidfixauslass-Modus und in einem Fluidwechselauslass-Modus betrieben wird.

2. Umrüstbares Wischsystem (1) gemäß Anspruch 1, **dadurch gekennzeichnet, dass** die Steuervorrichtung (14) beim Vorhandensein einer Fluidfixauslass-Wischerarmvorrichtung (17) in einem Fluidfixauslass-Modus betrieben wird, und beim Vorhandensein einer Fluidwechselauslass-Wischerarmvorrichtung (23) in einem Fluidwechselauslass-Modus betrieben wird.

3. Umrüstbares Wischsystem (1) gemäß einem der vorangehenden Ansprüche, **dadurch gekennzeichnet, dass** die Wischerarmvorrichtung (3) eine Haltearmvorrichtung (4) und/oder eine Wischerblattvorrichtung (5) aufweist, wobei vorzugsweise die Haltearmvorrichtung (4) und die Wischerblattvorrichtung (5) mittels eines Befestigungsmittels reversibel miteinander verbunden werden können.

4. Umrüstbares Wischsystem (1) gemäß einem der vorangehenden Ansprüche, insbesondere nach Anspruch 3, **gekennzeichnet durch** ein Kombinationsverbindungsmittel, welches gleichzeitig eine mechanische, sowie eine fluidische Verbindung zweier miteinander zu verbindender Teile (4, 5) bewirkt, insbesondere von Haltearmvorrichtung (4) und Wischerblattvorrichtung (5), wobei das Kombinationsverbindungsmittel vorzugsweise als reversibles Kombinationsverbindungsmittel ausgeführt ist.

5. Umrüstbares Wischsystem (1) gemäß einem der vorangehenden Ansprüche, insbesondere nach Anspruch 3 oder 4, **dadurch gekennzeichnet, dass** die Wischerarmvorrichtung (3), insbesondere die Wischerblattvorrichtung (5), bevorzugt die Fluidwechselauslass-Wischerarmvorrichtung (23), besonders bevorzugt eine Fluidwechselauslass-Haltevorrichtung und/oder eine Fluidwechselauslass-Wischerblattvorrichtung (23), ein Wegeventil (25) aufweist, insbesondere eine druckabhängiges Wegeventil (25), aufweist.

6. Umrüstbares Wischsystem (1) gemäß einem der vorangehenden Ansprüche, **dadurch gekennzeichnet, dass** die Steuervorrichtung (14) den Wechsel zwischen dem Fluidfixauslass-Modus und dem Fluidwechselauslass-Modus durch eine Änderung der Drehzahl und/oder der Drehrichtung der Fluidpumpe (10) bewirkt.

7. Umrüstbares Wischsystem (1) gemäß einem der vorangehenden Ansprüche **gekennzeichnet durch** zumindest einen Wischerarmvorrichtungs-Antriebsmotor (6), wobei die Steuervorrichtung (14) vorzugsweise den Wischerarmvorrichtungs-Antriebsmotor (6) steuert, ein Betriebszustandsignal von diesem erhält und/oder ein Positionssignal von diesem erhält.

8. Umrüstbares Wischsystem (1) gemäß einem der vorangehenden Ansprüche, **dadurch gekennzeichnet, dass** im Fluidwechselauslass-Modus die Freisetzung des von der Fluidpumpe (10) geförderten Fluids in einen in Bewegungsrichtung (8) der Wischerarmvorrichtung (3) gesehenen nach vorne gerichteten Bereich erfolgt.

9. Umrüstbares Wischsystem (1), gemäß einem der vorangehenden Ansprüche, insbesondere nach einem der Ansprüche 3 bis 8, **dadurch gekennzeichnet, dass** die Wischerarmvorrichtung (3) zumindest eine fluidisch mit der Fluidleitung verbundene Fluidauslassdüsenvorrichtung (20, 21, 24) aufweist, wobei vorzugsweise die als Fluidwechselauslass-Wischerarmvorrichtung (23) ausgebildete Wischerarmvorrichtung wenigstens zwei Fluidauslassdüsenvorrichtungen (20, 21, 24), welche Fluid in unterschiedliche Richtungen freisetzen und/oder auf unterschiedlichen Seiten der Wischerarmvorrichtung (3, 23) angeordnet sind.

10. Umrüstbares Wischsystem (1) gemäß einem der vorangehenden Ansprüche, insbesondere gemäß Anspruch 4, **dadurch gekennzeichnet, dass** das Wegeventil (25, 29) aufweist:
• zumindest einen Einlasskanal (38),
• einen ersten Auslasskanal (43),
• einen zweiten Auslasskanal (44),
• ein Steuerelement zum Steuern eines Fluidstromes zwischen dem zumindest einen Einlasskanal (38), dem ersten Auslasskanal (43) und/oder dem zweiten Auslasskanal (44),
• einen fluiddurchströmbar mit dem zumindest einen Einlasskanal (38) und mit dem ersten Auslasskanal (43) verbundenen ersten Verbindungskanal (33),
• einen ersten Ventilkopf (32) mit einem ersten Vorspannmittel (31), welcher innerhalb des ersten Verbindungskanals (33) zwischen einer Öffnungsposition stromaufwärts und einer ersten Verschlussposition stromabwärts verschiebbar derart angeordnet ist, dass wenn der am ersten Zylinderkopf (32) wirkende Druck eines durch den ersten Verbindungskanal (33) fließenden Fluids größer als ein erster Schaltdruck (*p*₁) ist und somit die Haltekraft des Vorspannmittels (31) übersteigt, der erste Ventilkopf (32) von der Öffnungsposition zu seiner ersten Verschlussposition stromabwärts verschoben wird,
• einen fluiddurchströmbar mit dem zumindest einen Einlasskanal (38) und mit dem zweiten Auslasskanal (44) verbundenen zweiten Verbindungskanal (35),
• einen zweiten Ventilkopf (34) mit einem zweiten Vorspannmittel (36), welcher innerhalb des zweiten Verbindungskanals (35) zwischen einer Verschlussposition stromaufwärts und einer Öffnungsposition stromabwärts verschiebbar derart angeordnet ist, dass wenn der am zweiten Zylinderkopf (34) wirkende Druck eines durch den zweiten Verbindungskanal (35) fließenden Fluids größer als ein zweiter Schaltdruck (*p*₂) ist und somit die Haltekraft des Vorspannmittels (36) übersteigt, der zweite Ventilkopf (34) von seiner Verschlussposition zu seiner Öffnungsposition stromabwärts verschoben wird, wobei
• der erste Verbindungskanal (33) so ausgebildet ist, dass er bei einer Bewegung des ersten Ventilkopfs (32) von seiner Öffnungsposition zu seiner Verschlussposition geschlossen wird, wobei der zweite Verbindungskanal (35) so ausgebildet ist, dass er durch eine Bewegung des zweiten Ventilkopfs (34) von seiner Verschlussposition zu seiner Öffnungsposition geöffnet wird.

11. Umrüstbares Wischsystem (1) gemäß einem der vorangehenden Ansprüche, **dadurch gekennzeichnet, dass** das Wegeventil (25, 30) aufweist: einen Einlasskanal (40), einen ersten Auslasskanal (43) und einen zweiten Auslasskanal (44), einen ersten Verbindungskanal (48), der den Einlasskanal (40) mit dem ersten Auslasskanal (43) verbindet, einen zweiten Verbindungskanal (50), der den Einlasskanal (40) mit dem zweiten Auslasskanal (44) verbindet, aufweisend ferner eine Schalteinheit, umfassend einen im Einlasskanal (40) zwischen einer ersten und einer zweiten Position verschiebbaren Kolben (41), wobei in der ersten Position des Kolbens (41) eine Fluidverbindung vom Einlasskanal (40) über den ersten Verbindungskanal (48) zum ersten Auslasskanal (43) besteht und in der zweiten Position des Kolbens (41) eine Fluidverbindung vom Einlasskanal (40) über den zweiten Verbindungskanal (50) zum zweiten Auslasskanal (44) besteht.

12. Verfahren (26) zum Umrüsten eines Wischsystems (1), insbesondere für ein Fahrzeug, aufweisend eine als Fluidfixauslass-Wischerarmvorrichtung (17) ausgebildete Wischerarmvorrichtung (3), eine Fluidpumpe (10), eine Fluidleitung (13) zur fluidischen Verbindung der Fluidpumpe (10) mit der Wischerarmvorrichtung (3) und eine in einem Fluidfixauslass-Modus betriebene Steuervorrichtung (14) zur Ansteuerung der Fluidpumpe (10),
**dadurch gekennzeichnet, dass** die Fluidfixauslass-Wischerarmvorrichtung (17) durch eine Fluidwechselauslass-Wischerarmvorrichtung (23) ersetzt (26) wird, und die Steuervorrichtung (14) von dem Fluidfixauslass-Modus in einen Fluidwechselauslass-Modus umgestellt (27) wird.

13. Verfahren (26) zum Umrüsten eines Wischsystems (1), insbesondere für ein Fahrzeug, aufweisend eine als Fluidwechselauslass-Wischerarmvorrichtung (23) ausgebildeten Wischerarmvorrichtung (3), eine Fluidpumpe (10), eine Fluidleitung (13) zur fluidischen Verbindung der Fluidpumpe (10) mit der Wischerarmvorrichtung (3) und eine in einem Fluidwechselauslass-Modus betriebene Steuervorrichtung (14) zur Ansteuerung der Fluidpumpe (10),
**dadurch gekennzeichnet, dass** die Fluidwechselauslass-Wischerarmvorrichtung (23) durch eine Fluidfixauslass-Wischerarmvorrichtung (17) ersetzt (26) wird, und die Steuervorrichtung vom (14) Fluidwechselauslass-Modus in einen Fluidfixauslass-Modus umgestellt (27) wird.

## Claims

1. A convertible wiper system (1), particularly for a vehicle, comprising a wiper arm device (2), a fluid pump (10), a fluid line (13) for fluidically connecting the fluid pump (10) to the wiper arm device (2), and a control device (14) for controlling the fluid pump (10), **characterized in that** either a fixed fluid outlet wiper arm device (17) or an alternating fluid outlet wiper arm device (23) is selectively used as the wiper arm device (3), and the control device (14) is selectively operated in at least a fixed fluid outlet mode and an alternating fluid outlet mode.

2. The convertible wiper system (1) according to claim 1, **characterized in that** the control device (14) is operated in a fixed fluid outlet mode when a fixed fluid outlet wiper arm device (17) is present, and is operated in an alternating fluid outlet mode when an alternating fluid outlet wiper arm device (23) is present.

3. The convertible wiper system (1) according to any one of the preceding claims, **characterized in that** the wiper arm device (3) comprises a holding arm device (4) and/or a wiper blade device (5), wherein preferably the holding arm device (4) and the wiper blade device (5) can be reversibly connected to each other by means of a fastener.

4. The convertible wiper system (1) according to any one of the preceding claims, particularly according to claim 3, **characterized by** a combination connecting means which simultaneously provides a mechanical and a fluidic connection of two parts (4, 5) to be connected to each other, particularly of the holding arm device (4) and the wiper blade device (5), wherein the combination connecting means is preferably designed as a reversible combination connecting means.

5. The convertible wiper system (1) according to any one of the preceding claims, particularly according to claim 3 or 4, **characterized in that** the wiper arm device (3), particularly the wiper blade device (5), preferably the alternating fluid outlet wiper arm device (23), particularly preferably an alternating fluid outlet holding device and/or an alternating fluid outlet wiper blade device (23), comprises a directional control valve (25), particularly a pressure-dependent directional control valve (25).

6. The convertible wiper system (1) according to any one of the preceding claims, **characterized in that** the control device (14) effects the change between the fixed fluid outlet mode and the alternating fluid outlet mode by a change in the rotational speed and/or the direction of rotation of the fluid pump (10).

7. The convertible wiper system (1) according to any one of the preceding claims, **characterized by** at least one wiper arm device drive motor (6), wherein the control device (14) preferably controls the wiper arm device drive motor (6), receives an operating state signal from it, and/or receives a position signal from it.

8. The convertible wiper system (1) according to any one of the preceding claims, **characterized in that** in the alternating fluid outlet mode, the release of the fluid conveyed by the fluid pump (10) takes place into a region directed forward as seen in the direction of movement (8) of the wiper arm device (3).

9. The convertible wiper system (1) according to any one of the preceding claims, particularly according to any one of claims 3 to 8, **characterized in that** the wiper arm device (3) comprises at least one fluid outlet nozzle device (20, 21, 24) fluidically connected to the fluid line, wherein preferably the wiper arm device designed as an alternating fluid outlet wiper arm device (23) has at least two fluid outlet nozzle devices (20, 21, 24) which release fluid in different directions and/or are arranged on different sides of the wiper arm device (3, 23).

10. The convertible wiper system (1) according to any one of the preceding claims, particularly according to claim 4, **characterized in that** the directional control valve (25, 29) comprises:
∘ at least one inlet channel (38),
∘ a first outlet channel (43),
∘ a second outlet channel (44),
∘ a control element for controlling a fluid flow between the at least one inlet channel (38), the first outlet channel (43) and/or the second outlet channel (44),
∘ a first connecting channel (33) fluidically connected to the at least one inlet channel (38) and to the first outlet channel (43),
∘ a first valve head (32) with a first biasing means (31), which is arranged within the first connecting channel (33) displaceably between an open position upstream and a first closed position downstream such that when the pressure acting on the first cylinder head (32) of a fluid flowing through the first connecting channel (33) is greater than a first switching pressure and thus exceeds the holding force of the biasing means (31), the first valve head (32) is displaced from the open position to its first closed position downstream,
∘ a second connecting channel (35) fluidically connected to the at least one inlet channel (38) and to the second outlet channel (44),
∘ a second valve head (34) with a second biasing means (36), which is arranged within the second connecting channel (35) displaceably between a closed position upstream and an open position downstream such that when the pressure acting on the second cylinder head (34) of a fluid flowing through the second connecting channel (35) is greater than a second switching pressure and thus exceeds the holding force of the biasing means (36), the second valve head (34) is displaced from its closed position to its open position downstream, wherein
∘ the first connecting channel (33) is designed such that it is closed during a movement of the first valve head (32) from its open position to its closed position, wherein the second connecting channel (35) is designed such that it is opened by a movement of the second valve head (34) from its closed position to its open position.

11. The convertible wiper system (1) according to any one of the preceding claims, **characterized in that** the directional control valve (25, 30) comprises: an inlet channel (40), a first outlet channel (43) and a second outlet channel (44), a first connecting channel (48) connecting the inlet channel (40) to the first outlet channel (43), a second connecting channel (50) connecting the inlet channel (40) to the second outlet channel (44), further comprising a switching unit comprising a piston (41) displaceable in the inlet channel (40) between a first and a second position, wherein in the first position of the piston (41) there is a fluid connection from the inlet channel (40) via the first connecting channel (48) to the first outlet channel (43) and in the second position of the piston (41) there is a fluid connection from the inlet channel (40) via the second connecting channel (50) to the second outlet channel (44).

12. A method (26) for converting a wiper system (1), particularly for a vehicle, comprising a wiper arm device (3) designed as a fixed fluid outlet wiper arm device (17), a fluid pump (10), a fluid line (13) for fluidically connecting the fluid pump (10) to the wiper arm device (3), and a control device (14) operated in a fixed fluid outlet mode for controlling the fluid pump (10), **characterized in that** the fixed fluid outlet wiper arm device (17) is replaced (26) by an alternating fluid outlet wiper arm device (23), and the control device (14) is switched (27) from the fixed fluid outlet mode to an alternating fluid outlet mode.

13. A method (26) for converting a wiper system (1), particularly for a vehicle, comprising a wiper arm device (3) designed as an alternating fluid outlet wiper arm device (23), a fluid pump (10), a fluid line (13) for fluidically connecting the fluid pump (10) to the wiper arm device (3), and a control device (14) operated in an alternating fluid outlet mode for controlling the fluid pump (10), **characterized in that** the alternating fluid outlet wiper arm device (23) is replaced (26) by a fixed fluid outlet wiper arm device (17), and the control device (14) is switched (27) from the alternating fluid outlet mode to a fixed fluid outlet mode.

## Revendications

1. Système d'essuie-glace convertible (1), en particulier pour un véhicule, comprenant un dispositif de bras d'essuie-glace (2), une pompe à fluide (10), une conduite de fluide (13) pour la connexion fluidique de la pompe à fluide (10) au dispositif de bras d'essuie-glace (2) et un dispositif de commande (14) pour commander la pompe à fluide (10), **caractérisé en ce qu'**un dispositif de bras d'essuie-glace à sortie de fluide fixe (17) ou un dispositif de bras d'essuie-glace à sortie de fluide alternée (23) est utilisé au choix comme dispositif de bras d'essuie-glace (3), et le dispositif de commande (14) est actionné au choix au moins dans un mode à sortie de fluide fixe et dans un mode à sortie de fluide alternée.

2. Système d'essuie-glace convertible (1) selon la revendication 1, **caractérisé en ce que** le dispositif de commande (14) est actionné dans un mode à sortie de fluide fixe en présence d'un dispositif de bras d'essuie-glace à sortie de fluide fixe (17), et est actionné dans un mode à sortie de fluide alternée en présence d'un dispositif de bras d'essuie-glace à sortie de fluide alternée (23).

3. Système d'essuie-glace convertible (1) selon l'une des revendications précédentes, **caractérisé en ce que** le dispositif de bras d'essuie-glace (3) comprend un dispositif de bras de maintien (4) et/ou un dispositif de lame d'essuie-glace (5), le dispositif de bras de maintien (4) et le dispositif de lame d'essuie-glace (5) pouvant de préférence être reliés l'un à l'autre de manière réversible au moyen d'un élément de fixation.

4. Système d'essuie-glace convertible (1) selon l'une des revendications précédentes, en particulier selon la revendication 3, **caractérisé par** un moyen de connexion combiné qui assure simultanément une connexion mécanique et une connexion fluidique de deux parties (4, 5) à relier l'une à l'autre, en particulier du dispositif de bras de maintien (4) et du dispositif de lame d'essuie-glace (5), le moyen de connexion combiné étant de préférence réalisé comme un moyen de connexion combiné réversible.

5. Système d'essuie-glace convertible (1) selon l'une des revendications précédentes, en particulier selon la revendication 3 ou 4, **caractérisé en ce que** le dispositif de bras d'essuie-glace (3), en particulier le dispositif de lame d'essuie-glace (5), de préférence le dispositif de bras d'essuie-glace à sortie de fluide alternée (23), de manière particulièrement préférée un dispositif de maintien à sortie de fluide alternée et/ou un dispositif de lame d'essuie-glace à sortie de fluide alternée (23), comprend une vanne de commutation (25), en particulier une vanne de commutation dépendant de la pression (25).

6. Système d'essuie-glace convertible (1) selon l'une des revendications précédentes, **caractérisé en ce que** le dispositif de commande (14) effectue le changement entre le mode à sortie de fluide fixe et le mode à sortie de fluide alternée par une modification de la vitesse de rotation et/ou du sens de rotation de la pompe à fluide (10).

7. Système d'essuie-glace convertible (1) selon l'une des revendications précédentes, **caractérisé par** au moins un moteur d'entraînement de dispositif de bras d'essuie-glace (6), le dispositif de commande (14) commandant de préférence le moteur d'entraînement de dispositif de bras d'essuie-glace (6), recevant de celui-ci un signal d'état de fonctionnement et/ou recevant de celui-ci un signal de position.

8. Système d'essuie-glace convertible (1) selon l'une des revendications précédentes, **caractérisé en ce que**, dans le mode à sortie de fluide alternée, la libération du fluide délivré par la pompe à fluide (10) s'effectue dans une zone dirigée vers l'avant, vue dans le sens de déplacement (8) du dispositif de bras d'essuie-glace (3).

9. Système d'essuie-glace convertible (1) selon l'une des revendications précédentes, en particulier selon l'une des revendications 3 à 8, **caractérisé en ce que** le dispositif de bras d'essuie-glace (3) comprend au moins un dispositif de buses de sortie de fluide (20, 21, 24) relié fluidiquement à la conduite de fluide, le dispositif de bras d'essuie-glace réalisé comme dispositif de bras d'essuie-glace à sortie de fluide alternée (23) comportant de préférence au moins deux dispositifs de buses de sortie de fluide (20, 21, 24) qui libèrent du fluide dans des directions différentes et/ou sont disposés sur des côtés différents du dispositif de bras d'essuie-glace (3, 23).

10. Système d'essuie-glace convertible (1) selon l'une des revendications précédentes, en particulier selon la revendication 4, **caractérisé en ce que** la vanne de commutation (25, 29) comprend :
∘ au moins un canal d'entrée (38),
∘ un premier canal de sortie (43),
∘ un deuxième canal de sortie (44),
∘ un élément de commande pour commander un flux de fluide entre le au moins un canal d'entrée (38), le premier canal de sortie (43) et/ou le deuxième canal de sortie (44),
∘ un premier canal de liaison (33) traversable par le fluide, relié au au moins un canal d'entrée (38) et au premier canal de sortie (43),
∘ une première tête de vanne (32) avec un premier moyen de précontrainte (31), qui est disposée à l'intérieur du premier canal de liaison (33) de manière déplaçable entre une position d'ouverture en amont et une première position de fermeture en aval de telle sorte que lorsque la pression agissant sur la première tête de cylindre (32) d'un fluide traversant le premier canal de liaison (33) est supérieure à une première pression de commutation et dépasse ainsi la force de maintien du moyen de précontrainte (31), la première tête de vanne (32) est déplacée de la position d'ouverture vers sa première position de fermeture en aval,
∘ un deuxième canal de liaison (35) traversable par le fluide, relié au au moins un canal d'entrée (38) et au deuxième canal de sortie (44),
∘ une deuxième tête de vanne (34) avec un deuxième moyen de précontrainte (36), qui est disposée à l'intérieur du deuxième canal de liaison (35) de manière déplaçable entre une position de fermeture en amont et une position d'ouverture en aval de telle sorte que lorsque la pression agissant sur la deuxième tête de cylindre (34) d'un fluide traversant le deuxième canal de liaison (35) est supérieure à une deuxième pression de commutation et dépasse ainsi la force de maintien du moyen de précontrainte (36), la deuxième tête de vanne (34) est déplacée de sa position de fermeture vers sa position d'ouverture en aval, dans lequel
∘ le premier canal de liaison (33) est configuré de telle sorte qu'il est fermé lors d'un mouvement de la première tête de vanne (32) de sa position d'ouverture vers sa position de fermeture, le deuxième canal de liaison (35) étant configuré de telle sorte qu'il est ouvert par un mouvement de la deuxième tête de vanne (34) de sa position de fermeture vers sa position d'ouverture.

11. Système d'essuie-glace convertible (1) selon l'une des revendications précédentes, **caractérisé en ce que** la vanne de commutation (25, 30) comprend : un canal d'entrée (40), un premier canal de sortie (43) et un deuxième canal de sortie (44), un premier canal de liaison (48) reliant le canal d'entrée (40) au premier canal de sortie (43), un deuxième canal de liaison (50) reliant le canal d'entrée (40) au deuxième canal de sortie (44), comprenant en outre une unité de commutation, comprenant un piston (41) déplaçable dans le canal d'entrée (40) entre une première et une deuxième position, une liaison fluidique existant dans la première position du piston (41) du canal d'entrée (40) au premier canal de sortie (43) par l'intermédiaire du premier canal de liaison (48) et une liaison fluidique existant dans la deuxième position du piston (41) du canal d'entrée (40) au deuxième canal de sortie (44) par l'intermédiaire du deuxième canal de liaison (50).

12. Procédé (26) pour convertir un système d'essuie-glace (1), en particulier pour un véhicule, comprenant un dispositif de bras d'essuie-glace (3) réalisé comme dispositif de bras d'essuie-glace à sortie de fluide fixe (17), une pompe à fluide (10), une conduite de fluide (13) pour la connexion fluidique de la pompe à fluide (10) au dispositif de bras d'essuie-glace (3) et un dispositif de commande (14) actionné dans un mode à sortie de fluide fixe pour commander la pompe à fluide (10), **caractérisé en ce que** le dispositif de bras d'essuie-glace à sortie de fluide fixe (17) est remplacé (26) par un dispositif de bras d'essuie-glace à sortie de fluide alternée (23), et le dispositif de commande (14) est commuté (27) du mode à sortie de fluide fixe à un mode à sortie de fluide alternée.

13. Procédé (26) pour convertir un système d'essuie-glace (1), en particulier pour un véhicule, comprenant un dispositif de bras d'essuie-glace (3) réalisé comme dispositif de bras d'essuie-glace à sortie de fluide alternée (23), une pompe à fluide (10), une conduite de fluide (13) pour la connexion fluidique de la pompe à fluide (10) au dispositif de bras d'essuie-glace (3) et un dispositif de commande (14) actionné dans un mode à sortie de fluide alternée pour commander la pompe à fluide (10), **caractérisé en ce que** le dispositif de bras d'essuie-glace à sortie de fluide alternée (23) est remplacé (26) par un dispositif de bras d'essuie-glace à sortie de fluide fixe (17), et le dispositif de commande (14) est commuté (27) du mode à sortie de fluide alternée à un mode à sortie de fluide fixe.
